# EUROPEAN PATENT SPECIFICATION

(11) **EP 4 216 485 B1**
(45) Date of publication and mention of the grant of the patent: **07.01.2026**
(21) Application number: 21869342.2
(22) Date of filing: 13.09.2021
(51) Int. Cl.: G06F 13/38

(54) **COMMUNICATION DEVICE, COMMUNICATION SYSTEM, AND COMMUNICATION METHOD**
KOMMUNIKATIONSVORRICHTUNG, KOMMUNIKATIONSSYSTEM UND KOMMUNIKATIONSVERFAHREN
DISPOSITIF, SYSTÈME ET PROCÉDÉ DE COMMUNICATION

(30) Priority: 18.09.2020 US 202063080382 P; 08.09.2021 US 202117469298
(43) Date of publication of application: 26.07.2023
(73) Proprietor: Sony Semiconductor Solutions Corporation, Atsugi-shi, Kanagawa 243-0014 (JP)
(72) Inventor: YAMADA, Junya, Atsugi-shi, Kanagawa 243-0014 (JP); HYAKUDAI, Toshihisa, Paramus, New Jersey 07652 (US)
(74) Representative: MFG Patentanwälte Meyer-Wildhagen Meggle-Freund Gerhard PartG mbB
(86) International application number: PCT/JP2021/033613
(87) International publication number: WO 2022/059655

(56) References cited:
- JP-A- 2004 356 742
- JP-A- 2015 142 189
- US-A1- 2018 083 800
- US-A1- 2019 129 881
- US-B1- 9 000 962

## Description

### [Technical Field]

The present disclosure relates to a communication device, a communication system, and a communication method.

### [Background Art]

A technology of, in a case where data communication is performed between a Master and a Slave, performing serial communication between a SerDes for the Master (hereinafter, M_SerDes) and a SerDes for the Slave (hereinafter, S_SerDes) has been proposed. Serial communication between the two SerDeses is performed through packet exchange based on a predetermined communication protocol.

Meanwhile, for example, GPIO (General Purpose Input/Output) communication is performed between the Master and the M_SerDes and between the Slave and the S_SerDes.
US 2018/083800 A1 discloses a communication device including an aggregation engine circuit. The aggregation engine circuit is configured to communicate with multiple protocols, including for example a GPIO protocol, wherein an acquire function for sampling input once per ring period is utilized, and to aggregate data from the protocols into a single channel for transfer, in which the protocols are heterogeneous.

### [Citation List]

### [Patent Literature]

[PTL 1] Japanese Patent Laid-open No. 2011-239011

### [Summary]

### [Technical Problems]

The M_SerDes having received data from the Master through GPIO communication samples the received data, converts the sampled data into a packet of a predetermined communication protocol, and transmits the packet to the S_SerDes. However, in a case where the amount of data received through GPIO communication is extremely large, sampling at a fixed period causes an increase of the sampling data amount.

A signal logic of data that is received through GPIO communication may rarely change. However, as long as such data is sampled at a fixed period, the post-sampling data amount cannot be reduced. Accordingly, the total amount of packets that are transmitted/received between the M_SerDes and the S_SerDes increases.

Therefore, the present disclosure provides a communication device, a communication system, and a communication method by which serial communication can efficiently be performed.

### [Solution to Problems]

According to a first aspect, the present invention provides a communication device according to independent claim 1. According to a second aspect, the present invention provides a communication device according to independent claim 9. According to a third aspect, the present invention provides a communication system according to independent claim 13. According to a fourth aspect, the present invention provides a communication method according to claim 14. Further aspects of the invention are set forth in the dependent claims, the drawings and the following description. In order to solve the problems described above, the present disclosure provides a communication device including a controller that determines a timestamp to be used as a start point and a unit period of the timestamp starting from the start point, an encapsulator that generates a first GPIO (General Purpose Input/Output) packet including all sampling data pieces obtained by sampling a GPIO signal supplied from a Master, by a fixed sampling period starting from the start point, in synchronization with the timestamp, or sampling data pieces obtained by performing sampling at a sampling interval corresponding to a frequency of a logic change of the GPIO signal and information regarding sampling positions, a LINK that generates an Up link packet including the first GPIO packet, and a PHY that transmits, to a communication counter device, a transmission signal including the Up link packet and conforming to a predetermined communication protocol.

The controller receives, from the Master, GPIO setting information that includes a sampling period, a timestamp, and sampling mode information by which either a first mode or a second mode is designated. In the first mode, the encapsulator generates the first GPIO packet that includes all sampling data pieces obtained by sampling a first GPIO signal received from the Master, by the sampling period starting from the start point, and in the second mode, in a case where a value of the sampling data piece sampled at a first sampling timing is not equal to a value of the sampling data piece sampled at a second sampling timing which is later by the sampling period than the first sampling timing, the encapsulator generates the first GPIO packet that includes the sampling data piece sampled at the second sampling timing and first time information indicating the second sampling timing.

The communication device may further include a deencapsulator that reproduces a second GPIO signal and transmits the second GPIO signal to the Master. The PHY may receive, from the communication counter device, a transmission signal conforming to the predetermined communication protocol. The LINK may separate a second GPIO packet from the transmission signal. The deencapsulator may reproduce the second GPIO signal on the basis of the mode information, the start point, the sampling period, and the second GPIO packet.

In the first mode, one or more sampling data pieces are included in the second GPIO packet, and the deencapsulator may reproduce the second GPIO signal by allocating the sampling data pieces included in the second GPIO packet to respective sampling data pieces sampled each time the sampling period elapses from the start point, and in the second mode, one or more sampling data pieces are included in the second GPIO packet in association with second time information indicating corresponding sampling timings, and the deencapsulator may reproduce the second GPIO signal by repeating a process of allocating the sampling data piece corresponding to the second time information at the sampling timing indicated by the second time information and then allocating the same sampling data piece during the sampling period until the next sampling timing indicated by the second time information included in the second GPIO packet.

The communication device may include a second timer that outputs time information synchronized with a first timer included in the Master. The deencapsulator may include a memory that stores the second GPIO signal. The second GPIO packet may include timestamp information regarding an output timing of the second GPIO signal. In a case where the timestamp information is set to a first value, the deencapsulator may transmit the second GPIO signal to the Master without storing the second GPIO signal into the memory, and in a case where the timestamp information is set to a second value, the deencapsulator may store the second GPIO signal into the memory, and read out the second GPIO signal from the memory and transmit the second GPIO signal to the Master when the second timer time information matches time information inserted succeedingly to the timestamp information in the second GPIO packet.

Prior to start of GPIO communication with the Master, the controller may control the encapsulator to generate the packet, on the basis of the GPIO setting information transmitted from the Master by a communication method that is different from GPIO communication.

The GPIO setting information may include at least one of information regarding a sampling frequency of the GPIO signal, GPIO pin setting information, GPIO configuration information, or information regarding a data length of the sampled data piece.

The encapsulator may generate the first GPIO packet that includes header information in which at least one of the sampling mode information, the sampling frequency information, the GPIO pin setting information, GPIO configuration information, or the data length information is included.

The GPIO configuration information may include the number of pins to perform GPIO communication, the GPIO pin setting information, and a time slot to store GPIO communication information.

Before a packet including the sampled data piece is transmitted to the communication counter device, the encapsulator may generate the first GPIO packet that does not include the sampled data piece but includes the header information.

The encapsulator may generate at least one of the first GPIO packet that does not include the sampled data piece but includes the header information, the first GPIO packet that includes the header information and the sampled data piece, or the first GPIO packet that does not include the header information but includes the sampled data piece.

The encapsulator may add at least one of timestamp information or error detection information to the first GPIO packet.

The communication protocol may include a communication protocol of a TDD (Time Division Duplex) communication method, and the unit period may be equal to one frame period of the TDD communication method.

The present disclosure provides a communication device including a PHY that receives, from a communication counter device, a transmission signal conforming to a predetermined communication protocol, a LINK that separates a first GPIO packet including a time control command from the transmission signal, a controller that determines a start point on the basis of the time control command, and a deencapsulator that determines whether sampling mode information included in header information in the first GPIO packet is set to a first mode indicating inclusion of all sampling data pieces obtained by sampling a GPIO (General Purpose Input/Output) signal transmitted from a Master, by a fixed sampling period, or a second mode indicating inclusion of sampling data pieces obtained by sampling the GPIO signal at a sampling interval corresponding to a timing of a logic change of the GPIO signal and information regarding sampling positions, and converts the first GPIO packet into a first GPIO signal and transmits the first GPIO signal to a Slave.

In the first mode, one or more sampling data pieces are included in the first GPIO packet, and the deencapsulator may reproduce the first GPIO signal by allocating the sampling data pieces included in the first GPIO packet to respective sampling data pieces sampled each time the sampling period elapses from the start point, and in the second mode, one or more sampling data pieces are included in the first GPIO packet in association with first time information indicating corresponding sampling timings, and the deencapsulator may reproduce the first GPIO signal by repeating a process of allocating the sampling data piece corresponding to the first time information at a sampling timing indicated by the first time information and then allocating the same sampling data piece during the sampling period until the next sampling timing indicated by the first time information included in the first GPIO packet.

The communication device may include a second timer that outputs time information synchronized with a first timer included in the Master. The deencapsulator may include a memory that stores the first GPIO signal. The first GPIO packet may include timestamp information regarding an output timing of the first GPIO signal. In a case where the timestamp information is set to a first value, the deencapsulator may transmit the first GPIO signal to the Slave without storing the first GPIO signal into the memory, and in a case where the timestamp information is set to a second value, the deencapsulator may store the first GPIO signal into the memory, and read out the first GPIO signal from the memory and transmit the first GPIO signal to the Slave when the second timer time information matches time information inserted succeedingly to the timestamp information in the first GPIO packet.

The communication device may include an encapsulator that generates a second GPIO packet including a sampling data piece obtained by, starting from a start point, sampling a second GPIO signal supplied from the Slave, by a fixed sampling period or at a sampling interval corresponding to a frequency of a logic change of the GPIO signal and information regarding a sampling position.

In the first mode, the encapsulator may generate the second GPIO packet that includes all sampling data pieces obtained by sampling the second GPIO signal received from the Slave, by the sampling period starting from the start point, and in the second mode, in a case where a value of the sampling data piece sampled at a first sampling timing is not equal to a value of the sampling data piece sampled at a second sampling timing which is later by the sampling period than the first sampling timing, the encapsulator may generate the second GPIO packet that includes the sampling data piece sampled at the second sampling timing and time information indicating the second sampling timing.

Prior to start of GPIO communication with the Slave, the controller may control input/output of a GPIO pin on the basis of GPIO pin setting information transmitted from the Master via the communication counter device.

The header information may include at least one of sampling frequency information, GPIO pin setting information, GPIO configuration information, or information regarding a data length of the sampled data piece.

The communication protocol may include a communication protocol of a TDD (Time Division Duplex) communication method.

The present disclosure provides a communication system including a Master SerDes and a Slave SerDes between which serial communication is performed by a predetermined communication protocol. The Master SerDes includes a first controller that determines a timestamp to be used as a start point and a unit period of the timestamp starting from the start point, a first encapsulator that generates a first GPIO (General Purpose Input/Output) packet including all sampling data pieces obtained by sampling a GPIO signal supplied from a Master, by a fixed sampling period starting from the start point, in synchronization with the time stamp, or sampling data pieces obtained by performing sampling at a sampling interval corresponding to a timing of a logic change of the GPIO signal and information regarding the sampling positions, a first LINK that generates an Up link packet including the first GPIO packet, and a first PHY that transmits, to a communication counter device, a transmission signal including the Up link packet and conforming to a predetermined communication protocol. The Slave SerDes includes a second PHY that receives, from a communication counter device, a transmission signal conforming to the predetermined communication protocol, a second LINK that separates a second GPIO packet including a time control command from the transmission signal, a second controller that determines a start point on the basis of the time control command, and a first deencapsulator that determines whether sampling mode information included in header information in the second GPIO packet is set to a first mode indicating inclusion of all sampling data pieces obtained by sampling a second GPIO signal transmitted from the Master, by a fixed sampling period, or a second mode indicating inclusion of sampling data pieces obtained by sampling the second GPIO signal at a sampling interval corresponding to a timing of a logic change of the GPIO signal and information regarding sampling positions, and converts the second GPIO packet into the second GPIO signal and transmits the second GPIO signal to a Slave.

The present disclosure provides a communication method for performing serial communication between a Master SerDes and a Slave SerDes by a predetermined communication protocol. The Master SerDes determines a timestamp to be used as a start point and a unit period of the timestamp starting from the start point, generates a first GPIO packet including all sampling data pieces obtained by sampling a GPIO signal supplied from a Master, by a fixed sampling period starting from the start point, in synchronization with the timestamp, or sampling data pieces obtained by performing sampling at a sampling interval corresponding to a timing of a logic change of the GPIO signal and information regarding sampling positions, generates an Up link packet including the first GPIO packet, and transmits a transmission signal including the Up link packet and conforming to a predetermined communication protocol to the Slave SerDes. The Slave SerDes receives a transmission signal conforming to the predetermined communication protocol from a communication counter device, separates a second GPIO packet including a time control command from the transmission signal, a second controller that determines a start point on the basis of the time control command, and determines whether sampling mode information included in header information in the second GPIO packet is set to a first mode indicating inclusion of all sampling data pieces obtained by sampling a second GPIO signal supplied from the Master, by a fixed sampling period, or a second mode indicating inclusion of sampling data pieces obtained by sampling the second GPIO signal at a sampling interval corresponding to a timing of a logic change of the GPIO signal and information regarding sampling positions, and converts the second GPIO packet into the second GPIO signal and transmits the second GPIO signal to a Slave.

### [Brief Description of Drawings]

[FIG. 1]

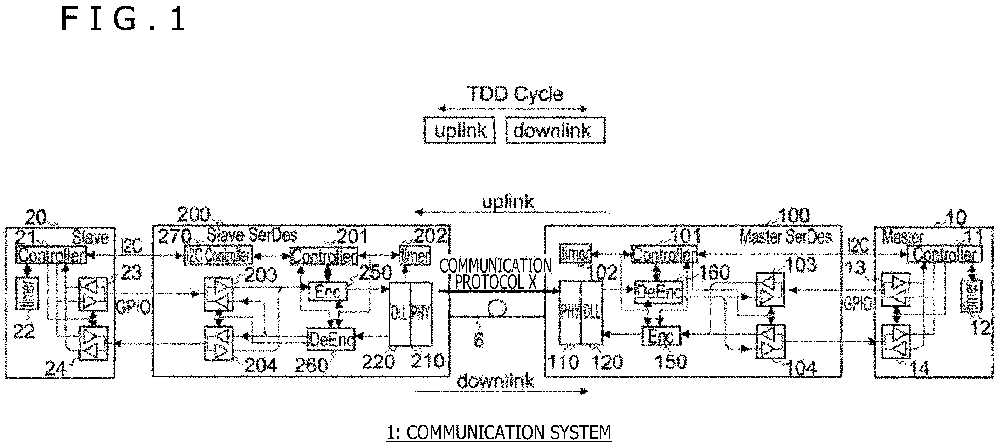

   FIG. 1 is a block diagram depicting a schematic configuration of a communication system including a communication device according to one embodiment.
[FIG. 2A]

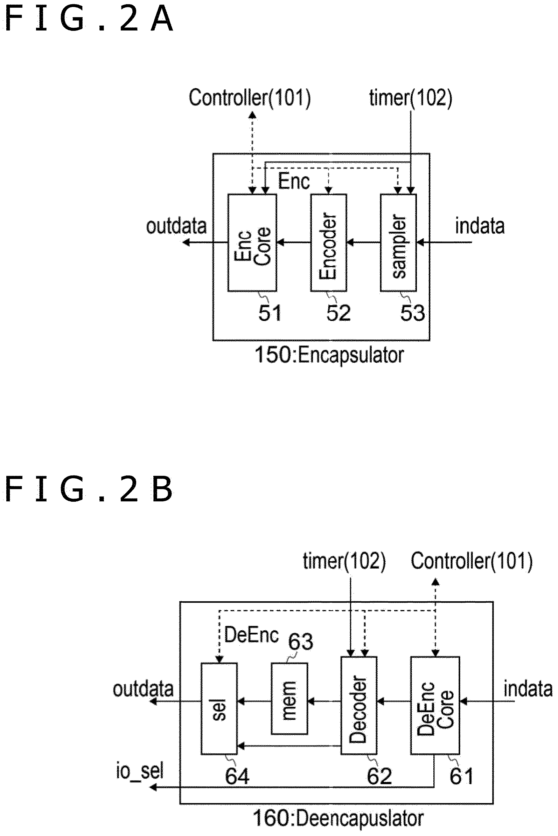

   FIG. 2A is a block diagram depicting an internal configuration of an encapsulator 150 of an M_SerDes 100.
[FIG. 2B]
   FIG. 2B is a block diagram depicting an internal configuration of a deencapsulator 160 of the M_SerDes 100.
[FIG. 3]

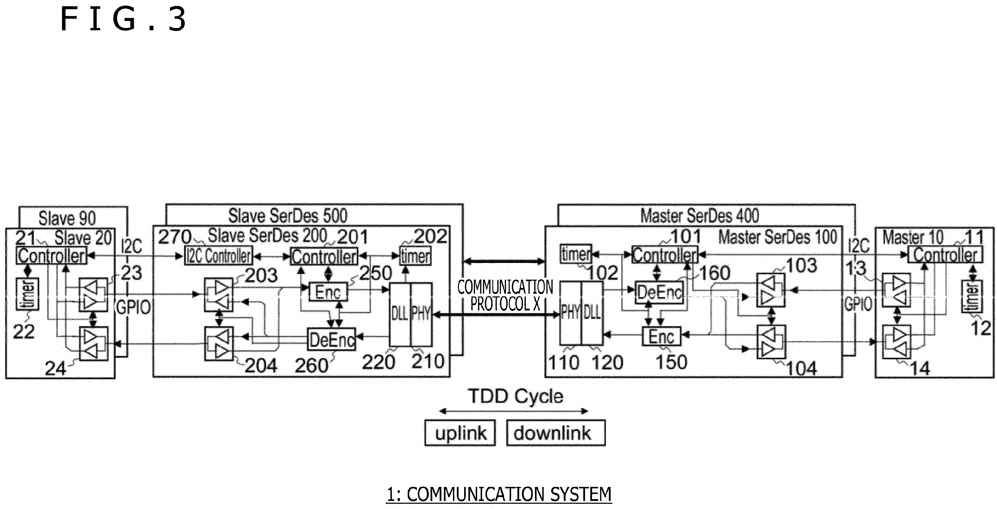

   FIG. 3 is a block diagram depicting a schematic configuration of a communication system including multiple M_SerDeses and multiple S SerDeses.
[FIG. 4]

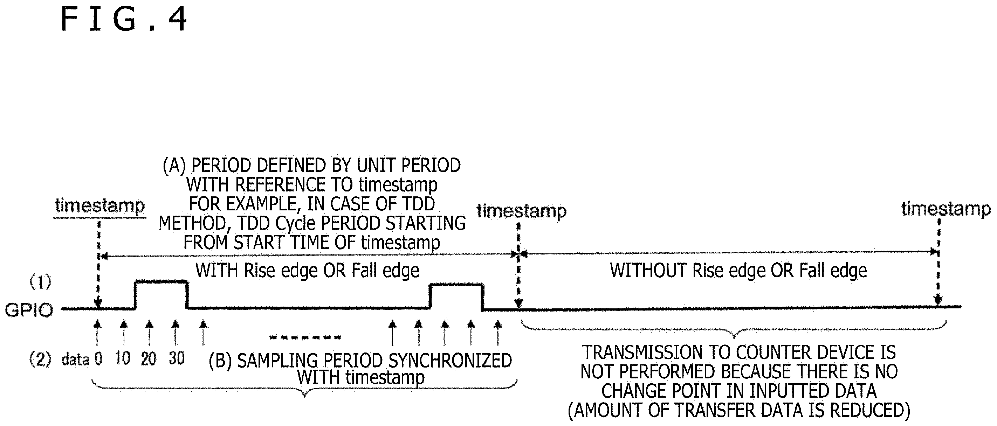

   FIG. 4 is a diagram depicting a relation between a TDD cycle and a sampling period of an Enc of an M_SerDes.
[FIG. 5]

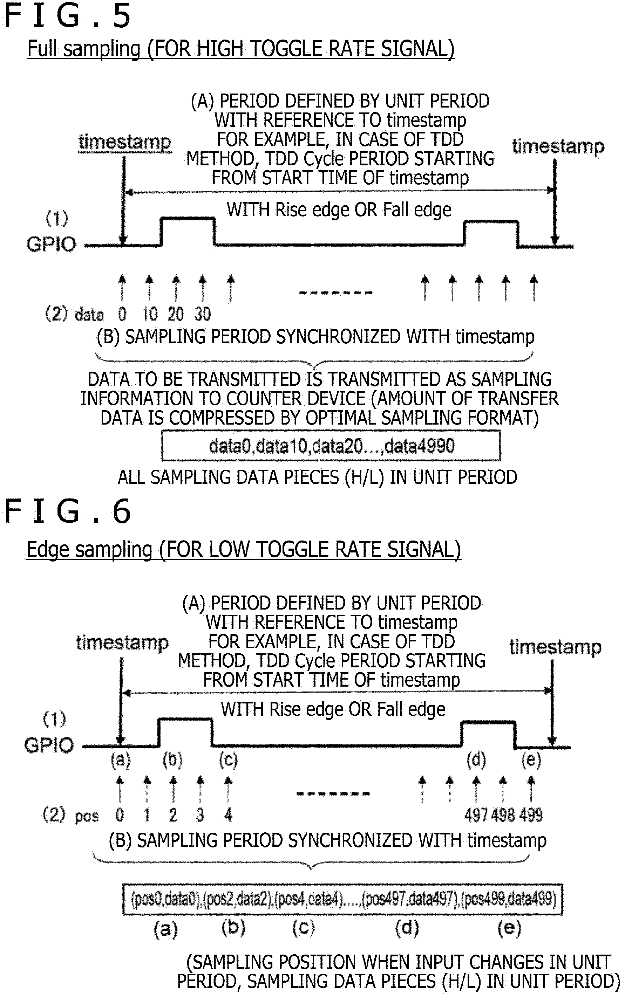

   FIG. 5 is a diagram for explaining details of full sampling.
[FIG. 6]
   FIG. 6 is a diagram for explaining details of edge sampling.
[FIG. 7]

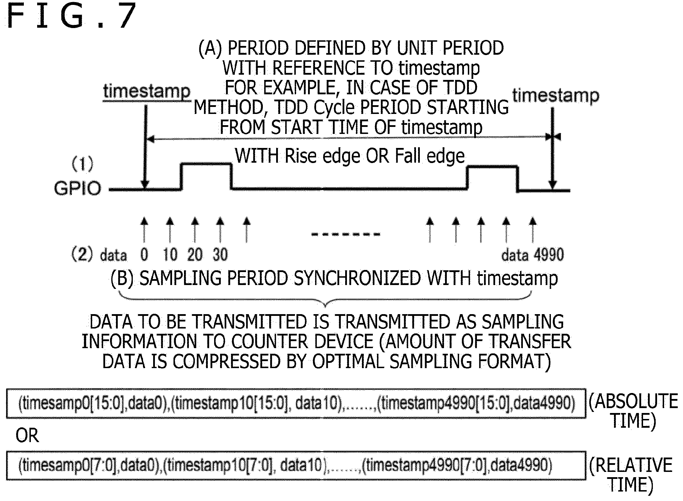

   FIG. 7 is a diagram depicting an example in which a sampling position is indicated in terms of absolute time or relative time within a unit period.
[FIG. 8]

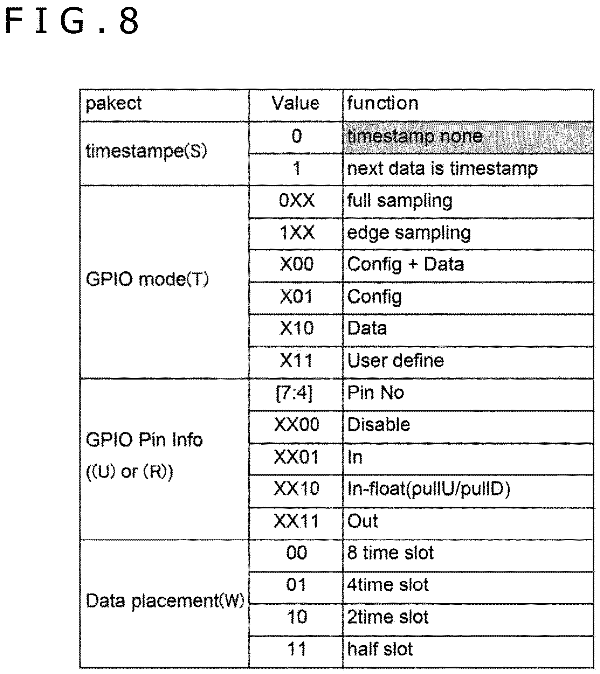

   FIG. 8 is a diagram depicting one example of GPIO header information.
[FIG. 9A]

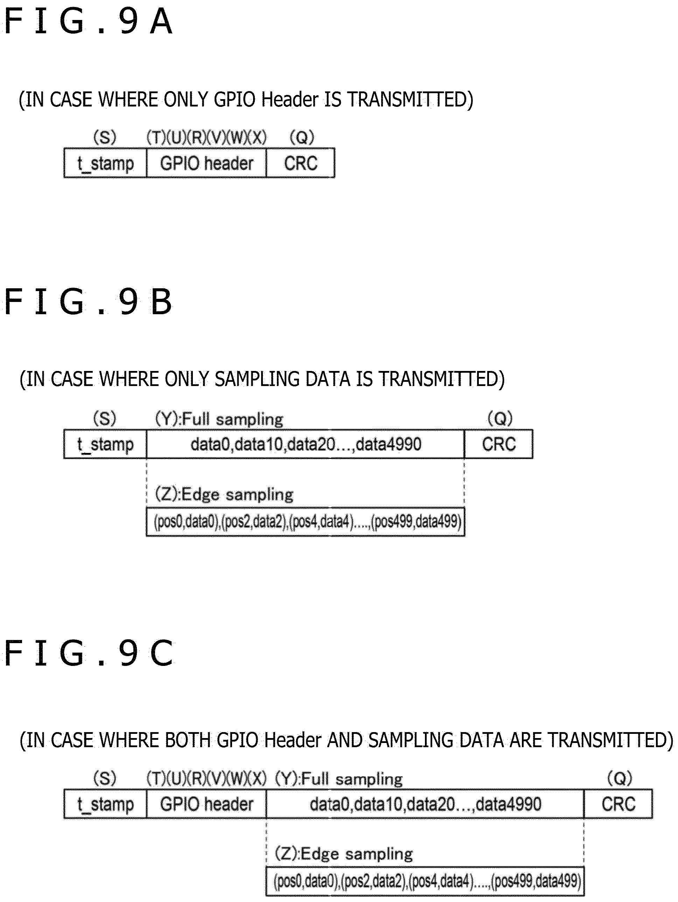

   FIG. 9A is a data configuration diagram of a packet including only GPIO header information.
[FIG. 9B]
   FIG. 9B is a data configuration diagram of a packet including only sampling data.
[FIG. 9C]
   FIG. 9C is a data configuration diagram of a packet including only GPIO header information and sampling data.
[FIG. 10]

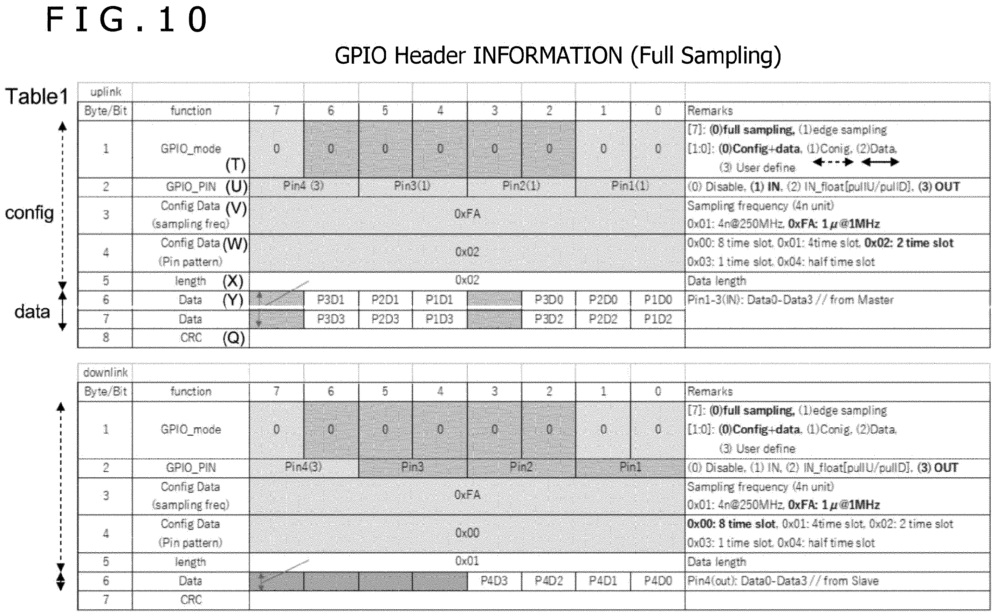

   FIG. 10 is a diagram depicting details of GPIO header information and data in a case where full sampling is performed.
[FIG. 11]

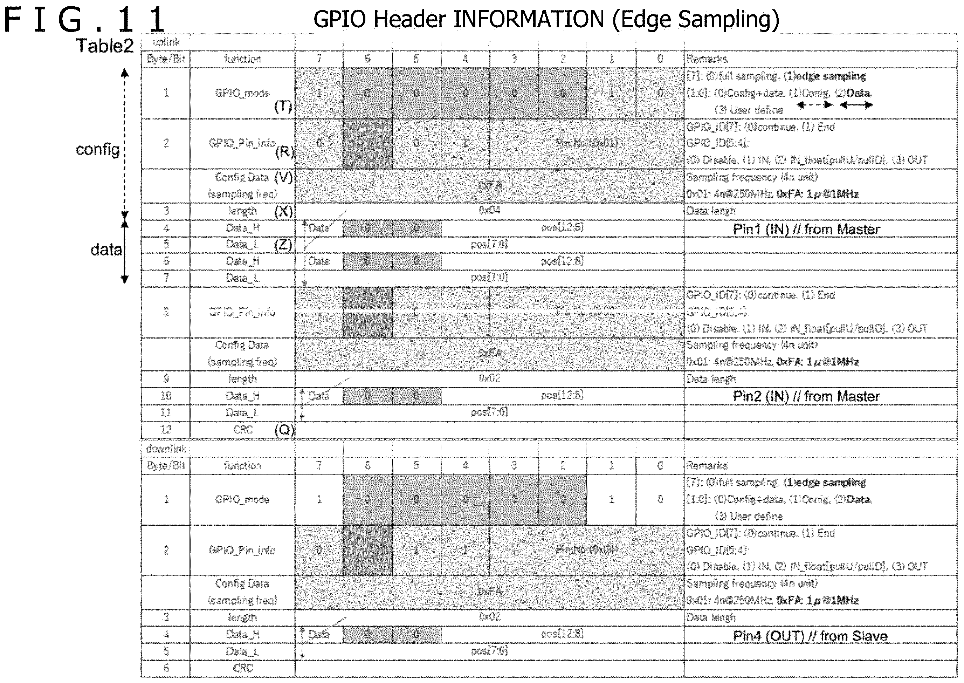

   FIG. 11 is a diagram depicting details of GPIO header information and data in a case where edge sampling is performed.
[FIG. 12]

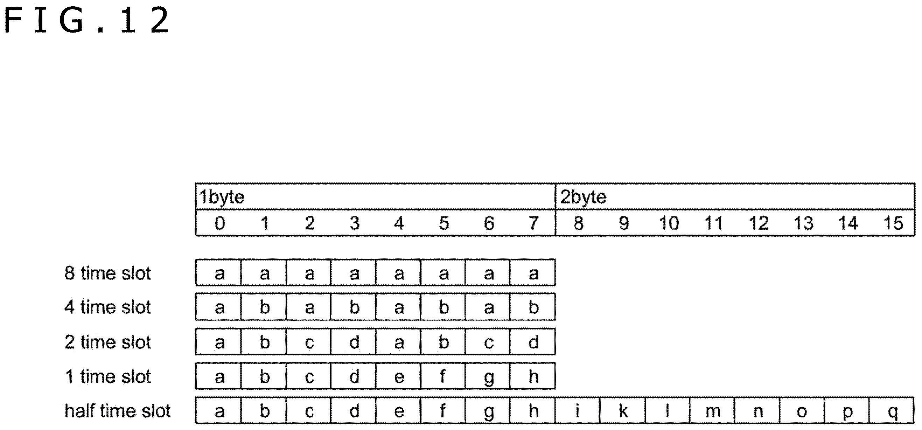

   FIG. 12 is a diagram for explaining details of pin placement.
[FIG. 13]

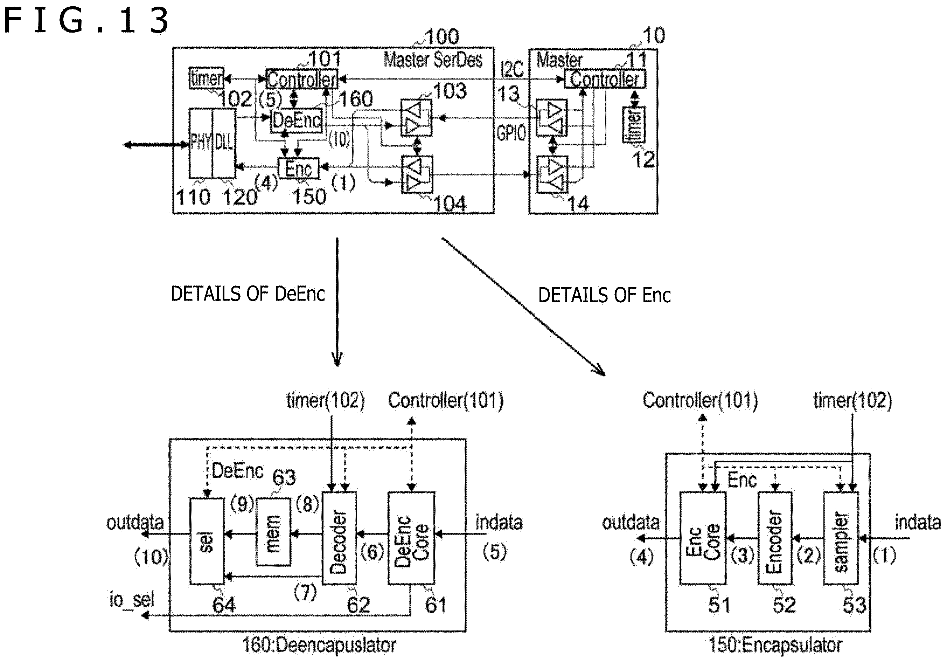

   FIG. 13 is a diagram obtained by adding signal transmission procedures (1) to (10) to a block diagram depicting an internal configuration of an M_SerDes.
[FIG. 14]

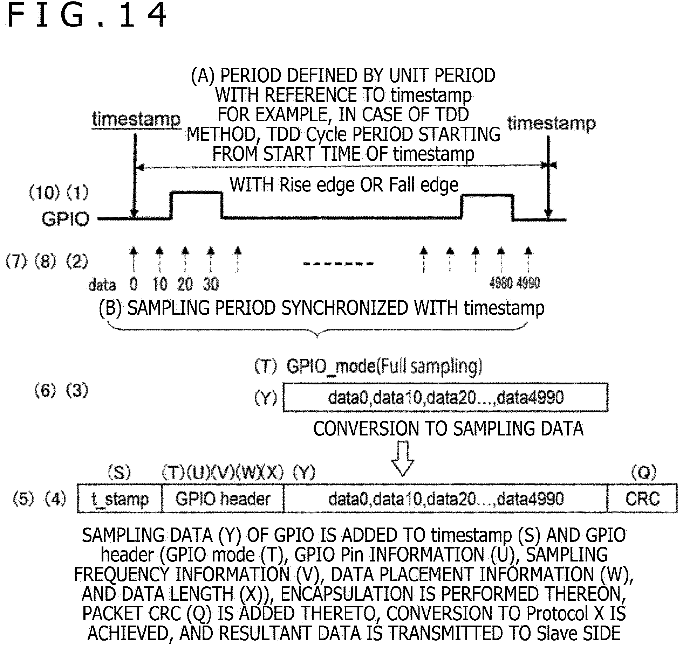

   FIG. 14 is a diagram depicting a sampling waveform of an M_SerDes, a GPIO packet, and an UP (Down) Link packet obtained when full sampling is performed.
[FIG. 15]

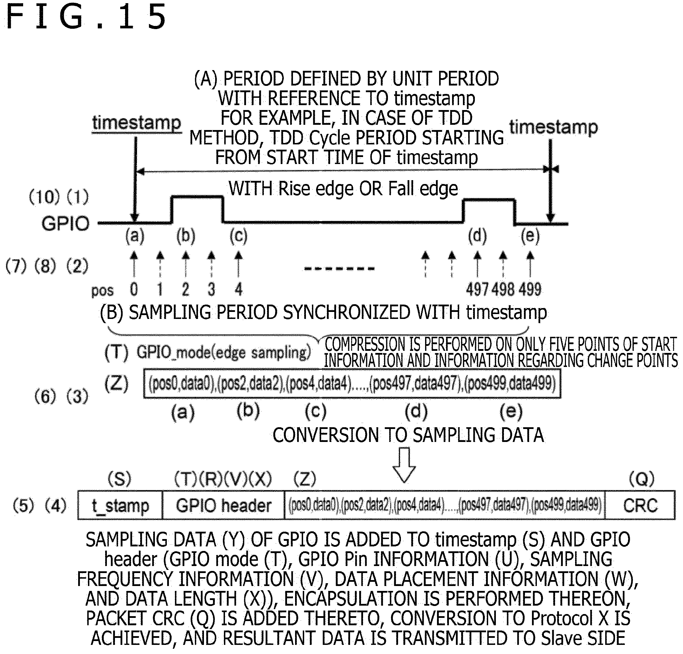

   FIG. 15 is a diagram depicting a sampling waveform of the M_SerDes 100, a GPIO packet, and an UP (Down) Link packet obtained when edge sampling is performed.
[FIG. 16]

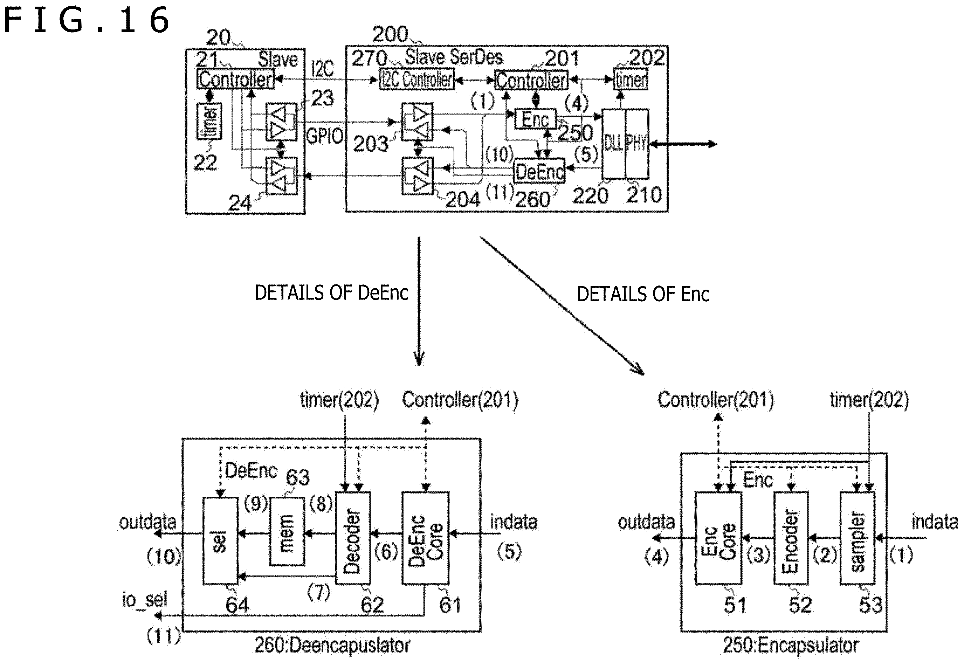

   FIG. 16 is a diagram obtained by adding signal transmission procedures (1) to (11) to a block diagram depicting an internal configuration of an S_SerDes.
[FIG. 17]

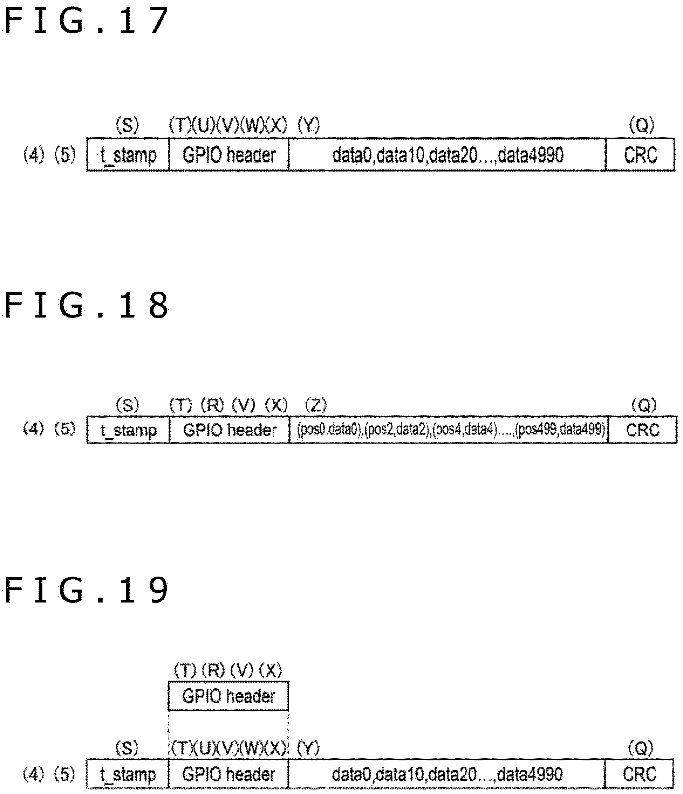

   FIG. 17 is a diagram depicting an UP (Down) Link packet that is transmitted/received by an S_SerDes when full sampling is performed.
[FIG. 18]
   FIG. 18 is a diagram depicting an UP (Down) packet that is transmitted/received by an S_SerDes when edge sampling is performed.
[FIG. 19]
   FIG. 19 is a diagram depicting a data configuration of a packet that is inputted to a deencapsulator 260.
[FIG. 20]

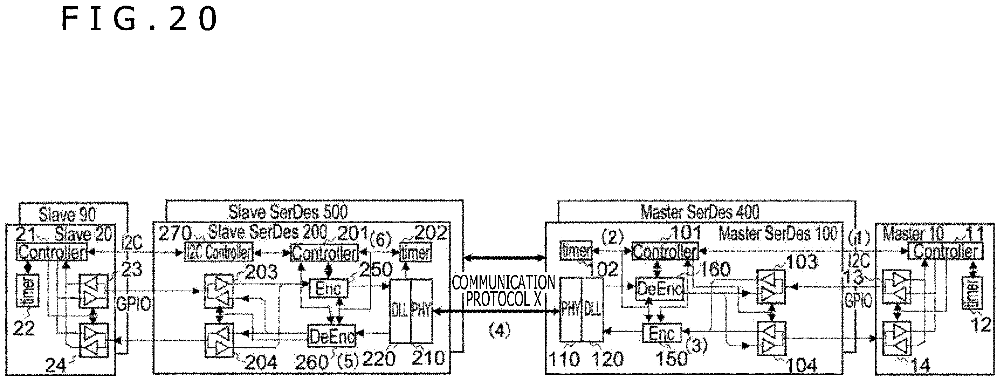

   FIG. 20 is a diagram depicting procedures (1) to (6) for achieving time synchronization among a timer of a Master, a timer of an M_SerDes, and a timer of an S_SerDes.
[FIG. 21]

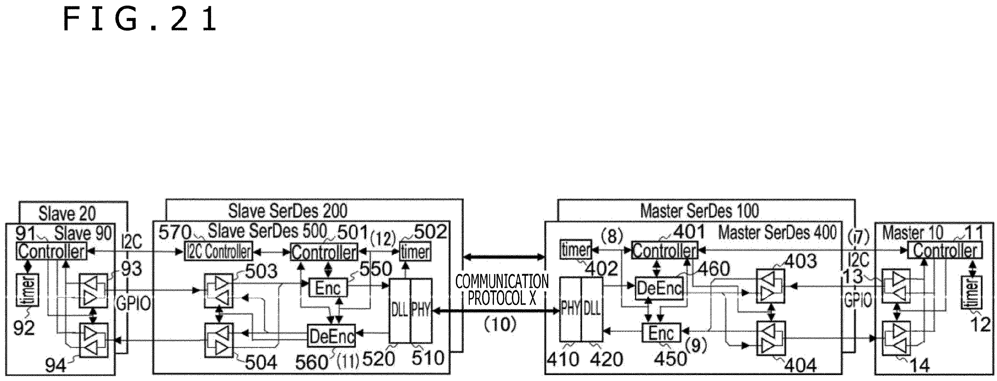

   FIG. 21 is a diagram depicting procedures (7) to (12) for achieving time synchronization among the timer of the Master, the timer of the M_SerDes, and the timer of the S_SerDes.

### [Description of Embodiments]

Hereinafter, embodiments of a communication device, a communication system, and a communication method will be explained with reference to the drawings. An explanation of important parts of the communication device, the communication system, and the communication method will mainly be given below, but the communication device, the communication system, and the communication method can include any other constituent part or function that is not depicted or explained. The following explanation is not intended to exclude any other constituent part or function that is not depicted or explained.

FIG. 1 is a block diagram depicting a schematic configuration of a communication system including a communication device according to one embodiment. For example, the communication system in FIG. 1 is a camera image recognition system which is one of ADAS (Advanced Driver Assistance Systems).

A communication system 1 in FIG. 1 includes a Master 10, a Master SerDes (M_SerDes) 100, a Slave, and a Slave SerDes (S_SerDes) 200. The M_SerDes 100 and/or the S_SerDes 200 is a communication device according to one embodiment of the present disclosure.

The M_SerDes 100 and the S_SerDes 200 are connected to each other in a communicable manner according to a predetermined communication standard (hereinafter, referred to as a "communication standard X"). Examples of the predetermined communication standard X include FPD-Link III, A-phy, and ASA. The predetermined communication standard X is not limited to any particular one. The M_SerDes 100 and the S_SerDes 200 each correspond to the communication device according to the present embodiment. In the present description, an example in which the M_SerDes 100 and the S_SerDes 200 perform serial signal transmission by a TDD method will mainly be explained.

The Master 10 and the M_SerDes 100 can exchange a serial signal at least by GPIO (General Purpose Input/Output) communication. It is to be noted that the Master 10 and the M_SerDes 100 may have a function of exchanging a serial signal not only by GPIO communication but also by I2C (Inter-Integrated Circuit) communication or SPI (Serial Peripheral Interface) communication.

In FIG. 1, a signal path, on a transmission path (cable) 6, through which information is transmitted by a serial signal from the S_SerDes 200 to the M_SerDes 100 is called Down Link, while a signal path, on the transmission path 6, through which information is transmitted by a serial signal from the M_SerDes 100 to the S_SerDes 200 is called UP Link.

The Master 10 in FIG. 1 includes a controller 11, a timer 12, and input/output buffers 13 and 14 for GPIO communication. In FIG. 1, only blocks that are related to GPIO communication in the Master 10 are illustrated. The Master 10 may have any function other than the function for GPIO communication, but such a function is omitted in FIG. 1. The controller 11 generates a GPIO signal to be transmitted to the M_SerDes 100 and performs control to transmit/receive a GPIO signal via the input/output buffers 13 and 14. The timer 12 is used for time synchronization with the M_SerDes 100, the Slave 20, and the S_SerDes 200, as will be explained later.

The M_SerDes 100 includes a controller 101, an encapsulator (Enc) 150, a Link Layer Block (hereinafter, referred to as a DLL or a LINK in some cases) 120, a PHY Layer Block (PHY) 110, a deencapsulator (DeEnc) 160, a timer 102, and input/output buffers 103 and 104.

The controller 101 determines a timestamp to be used as a start point and a unit period of the timestamp starting from the start point, on the basis of time information supplied by the timer 102. Further, the controller 101 controls the Enc 150 to generate an UP Link packet and controls the DeEnc 160 to retrieve a Down Link packet. In addition, the controller 101 acquires GPIO setting information, a unit period, and a set value for a sampling period, from the Master 10 by I2C communication. That is, the controller 101 has a function of controlling I2C with the Master 10. Moreover, on the basis of header information in a GPIO packet extracted from a Down Link packet received from the S_SerDes 200, the controller 101 determines whether data in the received GPIO packet includes all sampling data pieces sampled by a fixed sampling period or includes sampling data pieces sampled at a sampling interval corresponding to a logic change of a GPIO signal and sampling positions.

Here, a unit period refers to a time interval of timestamps. As setting information, a unit period may be given to the M_SerDes 100 and the S_SerDes 200 in advance. Alternatively, the Master 10 may transmit information regarding a unit period to the controller 101 of the M_SerDes 100 and a controller 201 of the S_SerDes 200 by I2C communication.

The encapsulator 150 generates a predetermined communication protocol packet including all sampling data pieces obtained by sampling a GPIO signal supplied from the Master 10, by a fixed sampling period in synchronization with a timestamp in each unit period designated by the controller 101, or sampling data pieces obtained by performing sampling at a sampling interval corresponding to a logic change of the GPIO signal and sampling positions. In a full sampling mode (first mode), the encapsulator 150 generates a first GPIO packet that includes all sampling data pieces obtained by sampling a first GPIO signal received from the Master, by a sampling period starting from a start point. In an edge sampling mode (second mode), in a case where the value of a sampling data piece sampled at a first sampling timing is not equal to the value of a sampling data piece sampled at a second sampling timing which is later by the sampling period than the first sampling timing, the encapsulator 150 generates a first GPIO packet that includes the sampling data piece sampled at the second sampling timing and first time information indicating the second sampling timing.

The DLL 120 generates an UP Link packet by combining a packet (also referred to as a GPIO packet) generated by the Enc with any other transmission packet. Further, the DLL 120 receives a Down Link packet transmitted from the S_SerDes 200 via the Down Link, extracts a GPIO packet from the Down Link packet, and transmits the GPIO packet to the deencapsulator 160.

The PHY 110 outputs the UP Link packet supplied from the DLL 120, to a transmission path according to an UP Link output timing by TDD. Further, the PHY 110 receives a Down Link packet transmitted from the S_SerDes 200 and transmits the Down Link packet to the DLL 120.

Under control of the controller 101, the deencapsulator 160 receives the GPIO packet extracted from the Down Link packet by the DLL 120 and converts the GPIO packet into a GPIO signal. The deencapsulator 160 transmits the GPIO signal obtained by the conversion to the Master 10 via the input/output buffers. The deencapsulator 160 reproduces a second GPIO signal on the basis of mode information, the start point, the sampling period, and the second GPIO packet. More specifically, the deencapsulator 160 reproduces a second GPIO signal on the basis of mode information, the start point, the sampling period, and the second GPIO packet. More specifically, in the full sampling mode (first mode), one or more sampling data pieces are included in the second GPIO packet, and the deencapsulator 160 reproduces the second GPIO signal by allocating the sampling data pieces included in the second GPIO packet to respective sampling data pieces sampled each time the sampling period elapses from the start point. In the edge sampling mode (second mode), one or more sampling data pieces are included in the second GPIO packet in association with second time information indicating the corresponding sampling timings, and the encapsulator 150 reproduces the second GPIO signal by repeating a process of allocating a sampling data piece corresponding to the second time information at a sampling timing indicated by the second time information and then allocating the same sampling data piece during the sampling period until the next sampling timing indicated by the second time information in the second GPIO packet.

The timer 102 outputs time information. The time information outputted by the timer 102 is inputted to the controller 101, the encapsulator 150, and the deencapsulator 160. The encapsulator 150 adds timestamp information or time information to a GPIO packet on the basis of time information supplied from the timer 102, as will be explained later.

The Slave 20 includes a controller 21, a timer 22, and input/output buffers 23 and 24. In FIG. 1, only blocks that are related to GPIO communication in the Slave 20 are illustrated. The Slave 20 may have any other function that is not related to GPIO communication, but such a function is omitted in FIG. 1. The controller 21 performs control to exchange a GPIO signal with the S_SerDes 200 via the input/output buffers 23 and 24. The timer 22 can be time-synchronized with the S_SerDes 200, the Master 10, and the M_SerDes 100, as will be explained later.

The S_SerDes 200 includes the controller 201, an encapsulator (Enc) 250, a Link Layer Block (DLL) 220, a PHY Layer Block (PHY) 210, a deencapsulator (DeEnc) 260, a timer 202, input/output buffers 203 and 204, and an I2C controller 270.

On the basis of header information in a GPIO packet extracted from an UP Link packet received from the M_SerDes 100, the controller 201 determines whether data in the received GPIO packet includes all sampling data pieces sampled by a fixed sampling period or includes sampling data pieces sampled at a sampling interval corresponding to a logic change of a GPIO signal and sampling positions. In addition, the controller 201 controls the Enc 250 to generate a packet and controls the DeEnc 260 to extract a GPIO signal from a packet. The controller 201 has a function of performing I2C communication with the Slave 20 via the I2C controller 270. The function of the I2C controller 270 may be included in the controller 201.

The Enc 250 generates a predetermined communication protocol packet (GPIO packet) that includes all sampling data pieces obtained by sampling a GPIO signal supplied from the Slave 20, by a fixed sampling period in synchronization with a timestamp every unit period or includes sampling data pieces obtained by performing sampling at a sampling interval corresponding to a logic change of the GPIO signal and sampling positions.

The DLL 220 generates a Down Link packet by combining the GPIO packet generated by the Enc 250 with other transmission packets. In addition, the DLL 220 extracts a GPIO packet from an UP Link packet received from the M_SerDes 100 via the UP Link and transmits the GPIO packet to the DeEnc 260.

The PHY 210 outputs the Down Link packet supplied from the DLL 220, to the transmission path according to a Down Link output timing of TDD. In addition, the PHY 210 receives an UP Link packet transmitted by the M_SerDes 100 and transmits the UP Link packet to the DLL 220.

Under control of the controller 201, the DeEnc 260 receives a GPIO packet extracted from the UP Link packet by the DLL 220 and converts the GPIO packet into a GPIO signal. The DeEnc 260 transmits the GPIO signal obtained by the conversion to the Slave 20 via the input/output buffers 203 and 204.

The timer 202 outputs time information. The time information outputted from the timer 202 is inputted to the controller, the Enc 250, and the DeEnc 260. The Enc 250 adds a timestamp to a GPIO packet on the basis of the time information supplied by the timer 202, as will be explained later.

FIG. 2A is a block diagram depicting an internal configuration of the encapsulator 150 of the M_SerDes 100. It is to be noted that the Enc 250 of the S_SerDes 200 has an internal configuration similar to that in FIG. 2A. As depicted in FIG. 2A, the encapsulator 150 includes a sampler 53, an encoder 52, and an Enc core 51.

The sampler 53 samples a GPIO signal transmitted from the Master 10, by a fixed sampling period and transmits all the sampled sampling data pieces, or transmits sampling data pieces sampled at a sampling interval corresponding to a logic change of the GPIO signal and sampling positions. In the present description, sampling a GPIO signal by a fixed sampling period is referred to as full sampling, and sampling a GPIO signal at a sampling interval corresponding to a logic change of the GPIO signal is referred to as edge sampling, as will be explained later. More specifically, in full sampling, a GPIO signal is sampled every sampling period, and all the sampled sampling data pieces are transmitted. In edge sampling, a GPIO signal is sampled by a sampling period, and a set of a sampling data piece sampled at a sampling interval at which a logic change of the GPIO signal has occurred and a sampling position thereof is transmitted.

The encoder 52 encodes the data pieces sampled by the sampler 53. The Enc core 51 generates a GPIO packet by adding header information or a timestamp to the encoded data obtained by the encoding by the encoder 52. The GPIO packet generated by the Enc core 51 is transmitted to the DLL 120.

FIG. 2B is a block diagram depicting an internal configuration of the deencapsulator 160 of the M_SerDes 100. It is to be noted that the DeEnc 260 of the S_SerDes 200 has an internal configuration similar to that in FIG. 2B. As depicted in FIG. 2B, the deencapsulator 160 includes a DeEnc core 61, a decoder 62, a memory (mem) 63, and a selector (sel) 64.

The DeEnc core 61 separates the GPIO packet extracted by the DLL from the Down Link packet received from the S_SerDes 200 via the transmission path and outputs the encoded data. The decoder 62 decodes the encoded data outputted by the DeEnc core 61 to restore sampling data used before the encoding, and temporarily stores the sampling data into the memory 63. The selector 64 restores the original GPIO signal on the basis of the sampling data stored in the memory 63 and the sampling data decoded by the decoder 62. The GPIO signal outputted from the selector 64 is transmitted to the Master 10 via the input/output buffers 103 and 104.

FIG. 1 depicts the example in which the Master 10 performs GPIO communication with one M_SerDes 100 and the Slave 20 performs GPIO communication with one S_SerDes 200. However, it can also be assumed that the Master 10 performs GPIO communication with multiple M_SerDeses 100 and that multiple Slaves 20 perform GPIO communication with multiple S_SerDeses 200. That is, one Master 10 can perform serial signal transmission with multiple Slaves 20 via multiple M_SerDeses 100 and multiple S_SerDeses 200.

FIG. 3 is a block diagram depicting a schematic configuration of the communication system 1 that includes multiple M_SerDeses 100 and 400 that perform GPIO communication with the Master 10, and multiple S_SerDeses 200 and 500 that perform GPIO communication with multiple Slaves 20 and 90. The M_SerDeses 100 and 400, the S_SerDeses 200 and 500, and the Slaves 20 and 90 have the internal configurations similar to those in FIG. 1. The Master 10 performs at least GPIO communication with the multiple M_SerDeses 100 and 400. The multiple M_SerDeses 100 and 400 each perform serial signal transmission with one of the multiple S_SerDeses 200 and 500 by a TDD method, for example. The multiple Slaves 20 and 90 each perform at least GPIO communication with one of the multiple S_SerDeses 200 and 500.

FIG. 4 is a diagram depicting a relation between a TDD cycle and a sampling period of the encapsulator 150 of the M_SerDes 100. It is to be noted that a sampling period of the Enc 250 of the S_SerDes 200 is similar to that of the encapsulator 150 of the M_SerDes 100.

The controller 101 of the M_SerDes 100 sets a timestamp to be used as a start point for sampling a GPIO signal, on the basis of time information supplied from the timer 102. In addition, the controller 101 sets a timestamp for each TDD cycle (unit interval) of a TDD method. FIG. 4 depicts three timestamps by way of example. The time intervals between these timestamps match the TDD cycle.

The sampler 53 of the encapsulator 150 samples a GPIO signal in synchronization with a timestamp set by the controller 101. As previously explained, the M_SerDes 100 selects to perform full sampling or edge sampling, on the basis of GPIO setting information supplied from the Master 10. More specifically, the controller 101 acquires GPIO setting information transmitted by I2C communication from the Master 10 and provides an instruction to perform full sampling or edge sampling to the M_SerDes 100, on the basis of the acquired GPIO setting information. The GPIO setting information includes at least one of GPIO signal sampling frequency information, GPIO pin setting information, GPIO configuration information, or information regarding the data length of a sampled data piece. The GPIO configuration information the GPIO configuration information includes the number of pins to perform GPIO communication, GPIO pin setting information, and a time slot for storing GPIO communication information.

In a case where the M_SerDes 100 performs full sampling, the sampler 53 of the encapsulator 150 starts sampling in synchronization with a timestamp and then samples a GPIO signal by a fixed period. More specifically, in a case where full sampling is performed, the sampler 53 samples a GPIO signal in synchronization with a rise edge or a fall edge of an unillustrated clock that is synchronized with the timestamp.

Further, in a case where edge sampling is performed, the sampler 53 starts sampling in synchronization with a timestamp and then performs sampling by a sampling period, as with the case of full sampling. However, in edge sampling, the sampler 53 transmits a sampling data piece at a time when a logic change of the GPIO signal occurs, together with a sampling position thereof. Therefore, in a case where a logic of the GPIO signal does not change during one TDD cycle, as depicted in the latter half period in FIG. 4, no sampling data piece is transmitted. Accordingly, the data amount of sampling data can be reduced.

By using GPIO setting information, the Master 10 designates whether the M_SerDes 100 and the S_SerDes 200 perform full sampling or perform edge sampling on the GPIO signal. The GPIO setting information includes GPIO mode information, as will be explained later. If the GPIO mode information is set to a full sampling mode, the M_SerDes 100 and the S_SerDes 200 perform full sampling. If the GPIO mode information is set to an edge sampling mode, the M_SerDes 100 and the S_SerDes 200 perform edge sampling.

FIG. 5 is a diagram for explaining details of full sampling. In a case where a full sampling mode is designated by the Master 10, the M_SerDes 100 and the S_SerDes 200 perform full sampling. In the full sampling, a GPIO signal is sampled at a fixed time interval during a time period between two adjacent timestamps. In a case where the M_SerDes 100 and the S_SerDes 200 perform serial signal transmission by a TDD method, the interval between the two adjacent timestamps is equal to one TDD cycle. The sampler 53 starts sampling a GPIO signal in synchronization with the timestamp which is the start point.

In the example in FIG. 5, the sampling is started in synchronization with the top timestamp, and a sampling data piece data0 is obtained. A sampling data piece is one-bit data that is set to 0 or 1. Thereafter, the sampling is performed 500 times within one TDD cycle, for example. The 500 sampled sampling data pieces data0, data10, ..., and data4990 are placed in order, so that a packet including 500-bit serial data is generated. Besides the serial data pieces depicted in FIG. 5, header information and a timestamp are added to an actual packet, as will be explained later.

A sampling frequency of the sampler 53 is designated by the Master 10 on the basis of GPIO setting information, as will be explained later. When the sampling frequency is high, the GPIO signal can be sampled with high accuracy, but the data amount of sampling data is increased. Accordingly, the amount of packets exchanged between the M_SerDes 100 and the S_SerDes 200 is increased. The Master 10 designates an optimal sampling frequency that is suitable for the GPIO signal.

It is to be noted that a packet is generated by placing 500 sampling data pieces in order in the example in FIG. 5. Alternatively, a packet that includes sampling data pieces and information regarding positions of the sampling data pieces may be generated. Further, the sampler 53 may sample the GPIO signal at a rise edge of the clock or may sample the GPIO signal at a fall edge of the clock.

FIG. 6 is a diagram for explaining details of edge sampling. In a case where the Master 10 designates an edge sampling mode, the M_SerDes 100 and the S_SerDes 200 perform edge sampling. In the edge sampling, a sampling data piece sampled at a timing when a logic change of the GPIO signal occurs is transmitted together with a sampling position thereof in the time period between two adjacent timestamps. More specifically, the sampling is started in synchronization with a timestamp (a) which is a start point, and a sampling data piece data0 is obtained. Thereafter, the sampling is performed by a fixed sampling period, but a set of a sampling data piece and a sampling position thereof is transmitted only when the logic of the GPIO signal changes ((b), (c), (d), and (e)). In the example in FIG. 6, the time interval between the two adjacent timestamps is equal to one TDD cycle. Within the one TDD cycle, a sampling period is provided at a fixed interval. Among multiple sampling data pieces, a sampling data piece obtained at a sampling timing immediately following the timing of a logic change of the GPIO signal is transmitted together with a sampling position thereof. In FIG. 6, sampling timings at which a logic change of the GPIO signal occurs are indicated by solid arrow lines, and sampling timings at which no logic change of the GPIO signal occurs are indicated by broken arrow lines. The GPIO signal may be sampled at a rise edge of the clock or may be sampled at a fall edge of the clock.

FIG. 6 depicts an example in which serial data is generated by placing sets each including a sampling position and a sampling data piece. At a sampling position synchronized with the top timestamp, a sampling data piece is transmitted, irrespective of whether a logic change of the GPIO signal has occurred. That is, a set of a sampling position pos0 and a sampling data piece data0 is transmitted. Thereafter, only at timings POS2, POS4, ..., and POS499 when a logic change of the GPIO signal has occurred, sets each including a sampling position and a sampling data piece are transmitted, and serial data is generated. Timestamp information and header information are added to the serial data in FIG. 6, so that a GPIO packet is generated.

It is to be noted that, instead of a set of a sampling position and a sampling data piece, a set of time information regarding the sampling timing and a sampling data piece may be formed to generate a packet. It is not necessary to use an absolute time for the time information regarding the sampling timing. A relative time elapsed from the sampling start time may be used therefor.

FIG. 7 is a diagram depicting an example in which a sampling position is indicated in terms of absolute time or relative time within a unit period. Two types of data formats are depicted in FIG. 7. An upper data format represents an example in which a 16-bit absolute time is used as time information. A lower data format represents an example in which an 8-bit relative time is used as time information. The relative time is a differential time from the sampling start time. Alternatively, the relative time may be a lower-side part of a bit string that represents an absolute time. When the time information is indicated by a relative time, the data amount of serial data in the packet can significantly be reduced.

A packet that is exchanged between the M_SerDes 100 and the S_SerDes 200 via the transmission path includes timestamp information and GPIO header information, in addition to the serial data of the data format depicted in FIGS. 5 to 7, as previously explained. FIG. 8 is a diagram depicting one example of the GPIO header information. The GPIO header information in FIG. 8 varies according to whether full sampling is performed or edge sampling is performed, as will be explained later. In FIG. 8, information items included in the GPIO header information for both full sampling and edge sampling are collectively indicated.

As depicted in FIG. 8, the GPIO header information includes GPIO mode (GPIO mode (T)), GPIO pin information (GPIO Pin info (U) or (R)), and data placement information (Data placement (W)).

Timestamp information t_stamp(S) is one bit. Timestamp information t_stamp(S) that is set to 0 indicates that there is no timestamp. Timestamp information t_stamp(S) that is set to 1 indicates that new time information is inserted immediately following the timestamp information t_stamp(S).

GPIO mode (T) is three-bit information, for example. GPIO mode (T) having the highest bit set to 0 indicates full sampling.

GPIO mode (T) having the highest bit set to 1 indicates edge sampling. The lower two bits of the three-bit GPIO mode (T) set to 00 indicate that the GPIO header information includes GPIO configuration information (configuration) and data information. The lower two bits that are set to 01 indicate that the GPIO header information includes GPIO configuration information but does not include data information. The lower two bits that are set to 10 indicate that the GPIO header information includes data information but does not include GPIO configuration information. The lower two bits that are set to 11 indicate that the GPIO header information includes user definition information (User define).

GPIO pin information (U) or (R) includes a pin number. The pin number is represented by, for example, four bits starting from the fourth bit to the seventh bit of the GPIO header information. Further, the lower two bits of the GPIO header information indicate that the pin is disabled, or indicate inputting a signal, inputting a signal in a high impedance state, or outputting a signal.

Data placement information (W) is two-bit information. Data placement information (W) that is set to 00 indicates to transmit serial data by using eight time slots for one pin. Data placement information (W) that is set to 01 indicates to transmit serial data with up to two pins by using four time slots for each pin. Data placement information (W) that is set to 10 indicates to transmit serial data with up to four pins by using two time slots for each pin. Data placement information (W) that is set to 11 indicates to transmit serial data with up to 16 pins by using one time slot for each pin. A specific example of data placement information (W) will be depicted in FIG. 12, as will be explained later.

When full sampling is performed, GPIO header information includes (T) and (U) in FIG. 8 among the information items depicted in FIG. 8. When edge sampling is performed, GPIO header information includes (T) and (R) in FIG. 8.

FIG. 9A, FIG. 9B, and FIG. 9C are diagrams each depicting a data structure of a packet that is transmitted by the M_SerDes 100 or the S_SerDes 200.

FIG. 9A depicts a case where a packet including GPIO header information only is transmitted. In this case, the packet includes timestamp information, header information, and CRC which is an error detection signal. The packet in FIG. 9A includes no data.

FIG. 9B depicts a case where a packet including sampling data only is transmitted. In this case, the packet includes timestamp information, full sampling or edge sampling data, and CRC. FIG. 9B does not include GPIO header information.

FIG. 9C depicts a case where a packet including GPIO header information and sampling data is transmitted. In this case, the packet includes timestamp information, GPIO header information, full sampling or edge sampling data, and CRC. In such a manner, the packet in FIG. 9C is used to transmit GPIO header information and data in combination.

The packets in FIGS. 9B and 9C each include serial data in which multiple sampling data pieces are placed in order in full sampling, and include serial data in which multiple sets each including sampling position information and a sampling data piece are placed in order in edge sampling. The packets in FIGS. 9A, 9B, and 9C are examples in which timestamp information t_stamp(S) is 0. In a case where timestamp information t_stamp(S) is set to 1, time information is inserted between the timestamp information t_stamp(S) and the GPIO header information in the packet in FIG. 9A, time information is inserted between the timestamp information t_stamp(S) and the sampling information in the packet in FIG. 9B, or time information is inserted between the timestamp information t_stamp(S) and the GPIO header information in the packet in FIG. 9C.

FIGS. 10 and 11 are diagrams each depicting details of GPIO header information that is included in a GPIO packet generated by the encapsulator 150 of the M_SerDes 100 or the Enc 250 of the S_SerDes 200.

### (GPIO header information in full sampling)

FIG. 10 depicts GPIO header information for full sampling. FIG. 11 depicts GPIO header information for edge sampling. A comparison between FIG. 10 and FIG. 11 indicates that there is a difference in a part of GPIO header information between a GPIO packet to be transmitted by UP Link and a GPIO packet to be transmitted by Down Link. In addition, GPIO header information varies according to whether full sampling is performed or edge sampling is performed.

Header information in a GPIO packet generated by the encapsulator 150 of the M_SerDes 100 is eight bytes which is denoted by UP Link in FIG. 10. The header information in the UP Link GPIO packet in FIG. 10 is an example in which two time slots are selected, as will be explained later. When two time slots are selected, up to four pins (Pin1 to Pin4) are used in such a way that the pins each simultaneously transmit one bit in parallel, so that one-byte data is transmitted with two time slots. It is to be noted that a time slot indicates the number of sampling data pieces of a GPIO signal that can be simultaneously transmitted.

The first byte of the header information in the UP Link GPIO packet in FIG. 10 indicates GPIO mode (T) and uses a bit [7] and a bit [1:0]. The bit [7] set to 0 indicates full sampling, and the bit [7] set to 1 indicates edge sampling. The bit [1:0] set to 00 indicates that GPIO configuration information and data information are included in the second and later bytes. The bit [1:0] set to 01 indicates that only GPIO configuration information is included in the second and later bytes. The bit [1:0] set to 10 indicates that only data information is included in the second and later bytes. The bit [1:0] set to 11 indicates that user definition information is included in the second and later bytes.

The second byte indicates GPIO pin information (U). A bit [1:0] is information regarding Pin1. A bit [3:2] is information regarding Pin2. A bit [5:4] is information regarding Pin3. A bit [7:6] is information regarding Pin4. The pin information regarding each of Pin1 to Pin4 is expressed by two bits. The pin information set to 00 indicates a disabled state. The pin information set to 01 indicates inputting a signal. The pin information set to 10 indicates inputting a signal in a high impedance state. The pin information set to 11 indicates outputting a signal.

In a case where two time slots are selected, up to four pins can be used to input or output signals. In the example in FIG. 10, Pin1 to Pin3 are used to input a signal while Pin4 is used to output a signal. That is, Pin1 to Pin3 are used for UP Link while Pin4 is used for Down Link.

The third byte indicates a sampling frequency which is a part (V) of the pin configuration information. For example, 0x01 in the third byte indicates a sampling frequency of 250 MHz (the sampling period is 4 nsec), and 0xFA in the third byte indicates a sampling frequency of 1 MHz (the sampling period is 1 µsec).

The fourth byte indicates pin placement (pin pattern) which is a part (W) of the pin configuration information. For example, 0x00, 0x01, 0x02, 0x03, and 0x04 in the fourth bytes indicate eight time slots, four time slots, two time slots, one time slot, and a half time slot, respectively. In the example in FIG. 10, 0x02 which indicates two time slots is depicted.

FIG. 12 is a diagram for explaining details of placement of pins. In a case where the fourth byte of the header information indicates eight time slots, one pin is used to perform serial signal transmission one bit by one bit. Accordingly, eight time slots are required to transmit one-byte data. In a case where the fourth byte of the header information indicates four time slots, two pins are used to each perform serial signal transmission one bit by one bit. Accordingly, four time slots are required to transmit one-byte data. In a case where the fourth byte of the header information indicates two time slots, four pins are used to each perform serial signal transmission one bit by one bit. Accordingly, two time slots are required to transmit one-byte data. In a case where the fourth byte of the header information indicates one time slot, eight pins are used to each perform serial signal transmission one bit by one bit. Accordingly, one time slot is required to transmit one-byte data. In a case where the fourth byte of the header information indicates a half time slot, 16 pins are used to each perform serial signal transmission one bit by one bit. Accordingly, a half time slot is required to transmit two-byte data.

In a case where a logic of data in the packet does not change, it is sufficient to fix a potential of each of the pins corresponding to the selected time slot, to a high potential or a low potential.

Described with reference to FIG. 10 again, the fifth to seventh bytes (X) and (Y) of the header information of the UP Link GPIO packet are data information. The fifth byte indicates a data length. 0x02 in the example in FIG. 10 indicates a data length of two bytes. The sixth and seventh bytes indicate data placement, in pins, of data to be transmitted by UP Link. The example in FIG. 10 indicates that four types of data, that is, Data0 to Data3, are transmitted in parallel through Pin1 to Pin3. Specifically, in the example, Pin1 to Pin3 each transmit one bit of Data0, Pin1 to Pin3 each transmit one bit of Data1, and then, Pin1 to Pin3 each transmit one bit of Data2. Finally, Pin1 to Pin3 each transmit one bit of Data3.

The eighth byte (Q) of the UP Link GPIO packet is error detection information (CRC). By using CRC added to a received packet, the packet receiving side can detect whether or not a bit error is included in the received packet.

The first byte of header information of a Down Link GPIO packet in FIG. 10 indicates a GPIO mode, which is the same as the GPIO mode in the UP Link GPIO packet. The second byte indicates GPIO pin information, which is the same as the GPIO pin information in the UP Link GPIO packet. In the example of FIG. 10, Pin4 is allocated for Down Link. The third and fourth bytes indicate pin configuration information. In the example of FIG. 10, the fourth byte is 0x00 which represents eight time slots. The fifth byte indicates the data length. The sixth byte indicates data information. The example in FIG. 10 indicates use of Pin4 to transmit fourth types of data (Data0 to Data3) sequentially. The seventh byte indicates CRC.

### (GPIO header information in edge sampling)

FIG. 11 depicts GPIO header information of a GPIO packet in a case where edge sampling is performed. The first byte of header information of an UP Link GPIO packet in FIG. 11 indicates a GPIO mode (T), which is the same as the GPIO mode in the header information in FIG. 10.

The second byte indicates GPIO pin information (R). The bit [7] set to 0 indicates to continue packet transmission, while the bit [7] set to 1 indicates to quit packet transmission. The bit [5:4] set to 00 indicates a disabled state. The bit [5:4] set to 01 indicates to input a signal and to input a signal in a high impedance state. The bit [5:4] set to 11 indicates to output a signal. The bit [3:0] in the second byte indicates a pin number. 0x01 indicated as the pin number indicates Pin1.

Further, the second byte may also designate sampling frequency information (V). The sampling frequency information is similar to that in the third byte in FIG. 10. The third byte indicates the data length which is similar to that in the fifth byte in FIG. 10.

The third to seventh bytes indicate data information (X) and (Z). In edge sampling, time slots are not selected. The reason is because only a logic change point of each signal is transmitted in edge sampling in such a manner that the number of data pieces to be transmitted does not indicate the elapsed time of data. Therefore, timing information regarding a logic change point of each signal is transmitted.

In the example in FIG. 11, Pin1 and Pin2 are allocated for UP Link while Pin4 is allocated for Down Link. Pin3 is set to don't care. In FIG. 11, the fourth to seventh bytes of the UP Link indicate information regarding Pin1. More specifically, information regarding the first-time logic change point in Pin1 is described in the fourth and fifth bytes, and information regarding the second-time logic change point in Pin2 is described in the sixth and seventh bytes.

The eighth to eleventh bytes of the UP Link in FIG. 11 indicate information regarding Pin2. In the example of FIG. 11, Pin1 has two logic change points while Pin2 has one logic change point. Therefore, regarding Pin2, information regarding the first-time logic change point is described in the ninth to eleventh bytes. The twelfth byte (Q) indicates CRC information.

In FIG. 11, the first byte of the Down Link indicates GPIO mode information, and the second byte indicates GPIO pin information. 0x04 indicated as GPIO pin information is a pin number representing Pin4. The fourth and fifth bytes indicate information regarding a logic change point in Pin4. The sixth byte indicates CRC information.

### (Operation of M_SerDes 100 in full sampling)

Next, operation of the M_SerDes 100 in full sampling will be explained. FIG. 13 is a diagram in which signal transmission procedures (1) to (10) are added to the block diagram depicting the internal configuration of the M_SerDes 100. FIG. 14 is a diagram depicting a sampling waveform of the M_SerDes 100, a GPIO packet, and an UP (Down) Link packet obtained when full sampling is performed.

The Master 10 has a function of transmitting GPIO header information ((R), (T), (U), (V), and (W)), a time control command for the timer 102, and GPIO setting information to the controller 101 of the M_SerDes 100 with use of a protocol of I2C or the like. For example, the Master 10 writes, as the GPIO header information or the time control command, a new setting time for the timer 102 into a proper register in the controller 101 by the I2C protocol. When the new setting time is written, the controller 101 causes the timer 102 to reflect the new setting time, so that time synchronization between the timer 12 of the Master 10 and the timer 102 of the M_SerDes 100 can be achieved. In a similar manner, when the Master 10 writes GPIO setting information (U) or (R) into a proper register in the controller 101 by the I2C protocol, the controller 101 performs GPIO setting.

The M_SerDes 100 includes the controller 101, the timer 102, the input/output buffers 103 and 104, the encapsulator 150, the deencapsulator 160, the LINK 120, and the PHY 110.

The controller 101 controls the timer 102, the input/output buffers 103 and 104, the encapsulator 150, and the deencapsulator 160.

The encapsulator 150 has a function of (2) sampling, by a designated sampling period (V), a GPIO signal (1) supplied from the Master 10, according to the time information inputted from the timer 102 and the GPIO header information ((T) to (X)) transmitted from the controller 101, converting the sampled GPIO signal into a sampling data piece (Y) by performing (3) encoding in the designated GPIO mode (T), encapsulating the GPIO header information ((T) to (X)) and the timestamp information t_stamp (S) related to time information transmitted from the controller 101 into the sampling data piece (Y), adding the CRC (Q) to the resultant data, and transmitting the packet (4) to the LINK 120. The timestamp information t_stamp(S) is one-bit information set to 0 or 1, as previously explained.

The encapsulator 150 is capable of generating a GPIO packet including data regarding the time control command transmitted from the Master 10 through I2C communication, and transmitting the GPIO packet to the S_SerDes 200. After receiving the GPIO packet, the S_SerDes 200 restores the time control command in the GPIO packet and sets the time control command for the timer 202, so that the Master 10, the M_SerDes 100, and the S_SerDes 200 can be synchronized with each other.

The deencapsulator 160 (6) extracts the sampling data piece (Y) by deencapsulating an input signal (5) inputted from the LINK 120 according to the GPIO header information ((T) to (W)) transmitted from the controller 101, (8) restores the original GPIO signal from a packet of the sampling data piece (Y), and writes the original GPIO signal in the memory 63 if needed.

In a case where the timestamp information t_stamp(S) in the received GPIO packet is set to 0, the deencapsulator 160 determines an output timing of the GPIO signal according to time information inputted from the timer 102. In this case, the restored GPIO signal is transmitted to the selector 64 without being written into the memory 63.

On the other hand, in a case where the timestamp information t_stamp(S) in the received GPIO packet is set to 1, the deencapsulator 160 determines an output timing of the GPIO signal on the basis of immediately-following time information. In this case, the deencapsulator 160 has a function (10) of writing the restored GPIO signal into the memory 63, and reading out the GPIO signal from the memory 63 and transmitting the GPIO signal to the Master 10 via the selector 64 at a timing when time information inputted from the timer 102 matches time information immediately following the timestamp information t_stamp(S).

In such a manner, if the timestamp information t_stamp (S) is set to 1, the GPIO signal can be transmitted to the Master 10 at a timing that corresponds to time information set by the Slave 20. In addition, in a case where multiple Slaves 20, multiple M_SerDeses 100, and multiple S_SerDeses 200 are provided, as will be explained later, a GPIO signal can be transmitted to the Master 10 at timings corresponding to time information set by the respective Slaves 20.

In addition, the deencapsulator 160 has a function of transmitting the new GPIO header information to the controller 101 in a case where new GPIO header information ((T) to (W)) is set after the deencapsulation (6).

It is to be noted that the GPIO header information transmitted from the controller 101 includes a GPIO mode (T) which indicates the data format of data to be transmitted/received, GPIO Pin information (U) regarding a pin being used, sampling period information (V), data placement information (W), and a data length (X).

In a case where the timestamp information t_samp(S) in the GPIO packet is set to 0 after the deencapsulation (6), the deencapsulator 160 causes the restored GPIO signal to pass through a path (7) according to a selection signal for the selector 64 supplied from the controller 101, and (10) transmits the GPIO signal to the Master 10 without delay.

### (Operation of M_SerDes 100 in edge sampling)

FIG. 15 is a diagram depicting a sampling waveform of the M_SerDes 100, a GPIO packet, and an UP (Down) Link packet obtained when edge sampling is performed.

The Master 10 has a function of transmitting GPIO header information ((R), and (T) to (W)), a time control command for the timer 102, and GPIO setting information to the controller 101 of the M_SerDes 100 with use of a protocol of I2C or the like.

The controller 101 of the M_SerDes 100 controls the timer 102, the input/output buffers 103 and 104, the encapsulator 150, and the deencapsulator 160.

The encapsulator 150 has a function of (2) sampling, by a designated sampling period, a GPIO signal (1) supplied from the Master 10, according to the time information inputted from the timer 102 and the GPIO header information ((R), (T), (V), and (X)) transmitted by the controller 101, converting the GPIO signal into a sampling data piece (Z) by performing (3) encoding in the designated GPIO mode (T), encapsulating the GPIO header information ((R), (T), (V), and (X)) and the timestamp information t_stamp (S) related to time information transmitted from the controller 101 into the sampling data piece (Z), adding CRC(Q) to the resultant data, and transmitting the packet (4) to the LINK 120.

The decapsulator 160 (6) deencapsulates an input signal (5) supplied from the LINK 120, according to GPIO header information ((R), (T), and (V)) transmitted by the controller 101, (6) extracts the sampling data piece (Z), (8) restores the original GPIO signal from a packet of the sampling data piece (Z), and writes the GPIO signal into the memory 63. Further, the decapsulator 160 has a function of (9) reading out the data piece written in the memory 63 after time information inputted from the timer 102 matches time information immediately following the timestamp information t_stamp (S) and (10) transmitting the data piece to the Master 10, a function of (8) restoring the original GPIO signal from a packet of the sampling data piece (Z) and (10) transmitting the GPIO signal to the Master 10, and a function of, in a case where new GPIO header information ((R), (T), and (V)) is set in the deencapsulation (6), transmitting the new GPIO header information to the controller 101.

It is to be noted that GPIO header information transmitted by the controller 101 includes a GPIO mode (T) which indicates the data format of data to be transmitted/received, a Pin number and setting information (R) regarding a GPIO pin being used, sampling period information (V), and a data length (X).

In a case where the timestamp information t_samp (S) is 0 after the deencapsulation (6) and no time information is included in inputted data, the deencapsulator 160 causes the GPIO signal to pass through the path (7) and the selector 64 according to a selection signal supplied from the controller 101, and (10) transmits the GPIO signal to the Master 10 without delay.

### (Operation of S_SerDes 200 in full sampling)

FIG. 16 is a diagram obtained by adding signal transmission procedures (1) to (11) to the block diagram depicting the internal configuration of the S_SerDes 200. FIG. 17 is a diagram depicting an UP (Down) Link packet that is transmitted/received by the S_SerDes 200 in full sampling.

The S_SerDes 200 includes the I2C controller 270, the controller 201, the timer 202, the input/output buffers 203 and 204, the deencapsulator 260, and the encapsulator 250.

The I2C controller 270 performs communication with the controller 21 of the Slave 20 with use of a protocol of I2C or the like.

The controller 201 has a function of controlling the LINK 220 and the PHY 210 that perform transmission/reception by the communication protocol X, and the timer 202, the Enc 250, the DeEnc 260, and the I2C controller 270 which are internal blocks. Prior to start of GPIO communication with the Slave 20, the controller 201 controls input/output of GPIO pins on the basis of GPIO pin setting information transmitted from the Master 10 via a communication counter device.

The deencapsulator 260 has a function of restoring the original GPIO signal or GPIO header information by deencapsulating a packet (5) of the communication protocol X. The deencapsulator 260 determines whether sampling mode information included in header information in the first GPIO packet is set to a full sampling mode (first mode), which indicates inclusion of all sampling data pieces obtained by sampling a GPIO signal transmitted from the Master, by a fixed sampling period, or an edge sampling mode (second mode) which indicates inclusion of sampling data pieces sampled at a sampling interval corresponding to the frequency of a logic change of the GPIO signal and information regarding sampling positions, converts the first GPIO packet into a first GPIO signal, and transmits the first GPIO signal to the Slave. More specifically, in a full sampling mode, one or more sampling data pieces are included in the first GPIO packet, and the deencapsulator 260 reproduces the first GPIO signal by allocating the sampling data pieces included in the first GPIO packet to respective sampling data pieces sampled each time the sampling period elapses from the start point. In an edge sampling mode, one or more sampling data pieces are included in the first GPIO packet in association with first time information indicating sampling timings at which the corresponding sampling data pieces are sampled, and the deencapsulator 260 reproduces the first GPIO signal by repeating a process of allocating a sampling data piece corresponding to the first time information at a sampling timing indicated by the first time information and then allocating the same sampling data piece during the sampling period until the next sampling timing indicated by the first time information in the first GPIO packet.

The encapsulator 250 samples and encapsulates a GPIO signal supplied from the Slave 20 and transmits a packet (4) to the M_SerDes 100. The encapsulator 250 has a function of (2) sampling a GPIO signal (1) supplied from the Slave 20, by a designated sampling period (V) according to time information inputted from the timer 202 and GPIO header information ((T) to (X)) transmitted by the controller 201, converting the GPIO signal into a sampling data piece (Y) by performing (3) encoding in the designated GPIO mode (T), encapsulating GPIO header information ((T) to (X)) and the timestamp information t_stamp (S) or time information transmitted by the controller 201 into the sampling data piece (Y), adding CRC(Q) to the resultant data, and transmitting a packet (4) to the LINK 220. The encapsulator 250 generates a second GPIO packet including sampling data obtained by sampling, from a start point, a second GPIO signal supplied from the Slave 20, by a fixed sampling period or at a sampling interval corresponding to the frequency of a logic change of the GPIO signal and information regarding sampling positions. More specifically, in the full sampling mode, the encapsulator generates a second GPIO packet that includes all sampling data pieces obtained by sampling a second GPIO signal received from the Slave, by the sampling period starting from a start point. In the edge sampling mode, in a case where the value of a sampling data piece sampled at a first sampling timing is not equal to the value of a sampling data piece sampled at a second sampling timing which is later by the sampling period than the first sampling timing, the encapsulator 250 generates a second GPIO packet that includes a sampling data piece sampled at the second sampling timing and time information indicating the second sampling timing.

The deencapsulator 260 deencapsulates an input signal (5) inputted from the LINK 220, according to GPIO header information ((T) to (W)) transmitted by the controller 201, (6) extracts the sampling data piece (Y), (8) restores the original GPIO signal from a packet of the sampling data piece (Y), and writes the GPIO signal into the memory 63 if needed.

In a case where the timestamp information t_stamp (S) included in the received GPIO packet is set to 0, the deencapsulator 260 determines an output timing of the GPIO signal on the basis of time information inputted from the timer 202. In this case, the restored GPIO signal is transmitted to the selector 64 without being written into the memory 63.

On the other hand, in a case where the timestamp information t_stamp (S) included in the received GPIO packet is set to 1, the deencapsulator 260 determines an output timing of the GPIO signal on the basis of the immediately-following time information. The deencapsulator 260 has a function (10) of, in this case, writing the restored GPIO signal into the memory 63, and reading out the GPIO signal from the memory 63 and transmitting the GPIO signal to the Slave 20 via the selector 64 at a timing when time information inputted from the timer 202 matches time information immediately following the timestamp information t_stamp(S).

Thus, the deencapsulator 260 has a function (10) of, in a case where the timestamp information t_stamp(S) is set to 1, (9) reading out data written in the memory 63 and transmitting the data to the Slave 20 after the time information inputted from the timer 202 matches time information immediately following the timestamp information t_stamp (S).

Accordingly, if the timestamp information t_stamp (S) is set to 1, a GPIO signal can be transmitted to the Slave 20 at a timing corresponding to time information set by the Master 10. In addition, in a case where multiple Slaves 20, multiple M_SerDeses 100, and multiple S_SerDeses 200 are provided, as will be explained later, GPIO signals can simultaneously be transmitted to the respective Slaves 20 at a timing corresponding to time information set by the Master 10.

In addition, the deencapsulator 260 has a function of, in a case where setting information (U) regarding the input/output buffers 203 and 204 is included after the deencapsulation (6), setting the input/output buffers 203 and 204 according to the setting information (U), and has a function of, in a case where new GPIO header information ((T) to (W)) is included in the deencapsulation (6), transmitting the new GPIO header information to the controller 201.

In a case where a received GPIO packet includes a time control command for the timer 202, the controller 201 causes the timer 202 to reflect a new setting time that is included in the time control command, so that the time of the timer 12 can be synchronized with the time of the timer 202.

### (Operation of S_SerDes 200 in edge sampling)

FIG. 18 is a diagram depicting an UP (Down) packet that is transmitted/received by the S_SerDes 200 when edge sampling is performed. The encapsulator 250 of the S_SerDes 200 has a function of (2) sampling a GPIO signal (1) supplied from the Slave 20, by a designated sampling period (V) according to time information inputted from the timer 202 and GPIO header information ((R), (T), (V), and (X)) transmitted by the controller 201, converting the GPIO signal into a sampling data piece (Y) by performing (3) encoding in a designated GPIO mode (T), adding GPIO header information ((R), (T), (V), and (X)), time information transmitted by the controller 201, and a timestamp information t_stamp (S) to the sampling data piece (Y) to encapsulate the sampling data piece, adding CRC(Q) to the resultant data, and transmitting a packet (4) to the LINK 220.

The deencapsulator 260 deencapsulates the input signal (5) supplied from the LINK 220, according to GPIO header information ((R), (T), and (V)) transmitted from the controller 201, extracts the sampling data piece (Y), restores the original GPIO signal from a packet of the sampling data piece (Y), and writes the GPIO signal into the memory 63. Further, the deencapsulator 260 has a function (10) of (9) reading out data written in the memory 63 and transmitting the data to the Slave 20 after time information inputted from the timer 202 matches time information immediately following the timestamp information t_stamp (S), a function of, in a case where setting information (U) regarding a pin connected to the input/output buffers 203 and 204 is included in the deencapsulation (6), setting the input/output buffers 203 and 204 according to the setting information (U), and a function of, in a case where new GPIO header information ((R), (T), and (V)) is included in the deencapsulation (6), transmitting the new GPIO header information to the controller 201.

### (GPIO control at deencapsulator 260 of S_SerDes 200)

The deencapsulator 260 deencapsulates a packet (5) supplied from the LINK 220, according to GPIO header information ((T) to (X), or (R), (T), and (V)) transmitted by the controller 201, (6) extracts a sampling data piece (Y), (8) restores the original GPIO signal from a packet of the sampling data piece (Y), and writes the GPIO signal into the memory 63.

FIG. 19 is a diagram depicting a data structure of a packet that is inputted to the deencapsulator 260. The deencapsulator 260 has a function (10) of (9) reading out data written in the memory 63 and transmitting the data to the Slave 20 when time information inputted from the timer 202 matches time information immediately following the timestamp information t_stamp (S). Further, the deencapsulator 260 has a function of, in a case where setting information (U) regarding a pin connected to the input/output buffers 203 and 204 is included in the deencapsulation (6), setting the input/output buffers 203 and 204 according to the setting information (U) and a function of, in a case where new GPIO header information ((T) to (X), or (R), (T), and (V)) is included in the deencapsulation (6), transmitting the new GPIO header information to the controller 201.

The deencapsulator 260 deencapsulates a packet (5). In a case where setting information (U) or (R) regarding a pin connected to the input/output buffers 203 and 204 is included in the packet, the deencapsulator 260 confirms the setting information (U) or (R) regarding the pin and performs GPIO setting.

For example, if setting information (U) or (R) regarding the input/output buffer 203 indicates IN, GPIO setting for GPIO is performed in such a way that output from the Slave 20 is inputted. If setting information (U) or (R) regarding the input/output buffer 204 indicates OUT, GPIO setting for GPO is performed in such a way that a signal inputted to the Slave 20 is outputted. In a case where pull Up or pull Down is performed outside the input/output buffers 203 and 204, the GPIO setting information (U) or (R) is set to IN_float (pullup/pulldown).

It is to be noted that the controller 101 of the M_SerDes 100 also can perform setting on the input/output buffers 103 and 104.

### (System time synchronization 1/2)

FIG. 20 is a diagram depicting procedures (1) to (6) for achieving time synchronization among the timer 12 of the Master 10, the timer 102 of the M_SerDes 100, and the timer 202 of the S_SerDes 200.
(1) The Master 10 transmits, to the controller 101 through I2C, a time control command for time-synchronizing the timer 12 of the Master 10 and the timer 102 of the M_SerDes 100.
(2) According to the received command, the M_SerDes 100 sets the timer 102 in such a way that the time of the timer 102 coincides with the time of the timer 12 of the Master 10.
(3) The Master 10 causes the encapsulator 150 of the M_SerDes 100 to encapsulate a time control command for time-synchronizing the timer 12 of the Master 10 and the timer 202 of the S_SerDes 200, in the protocol X format.
(4) The encapsulated time control command of the protocol X format is transmitted to the S_SerDes 200.
(5) The time control command is restored by deencapsulation at the deencapsulator 260 of the S_SerDes 200 and is transmitted to the controller 201 of the S_SerDes 200.
(6) According to the received command, the controller 201 sets the timer 202 in such a way that the time of the timer 202 coincides with the time of the timer 12 of the Master 10.

In the manner described above, time synchronization among the timers (12, 102, and 202) can be achieved.

### (System time synchronization 2/2)

FIG. 21 is a diagram depicting procedures (7) to (12) for achieving time synchronization among the timer 12 of the Master 10, the timers 102 and 402 of the M_SerDeses 100 and 400, and the timers 202 and 502 of the S_SerDeses 200 and 500.

(7) The Master 10 transmits, to the controllers 101 and 401, time control commands for time-synchronizing the timer 12 of the Master 10 and the timers 102 and 402 of the M_SerDes 100 and 400.

(8) According to the received commands, the M_SerDeses 100 and 400 set the timers 102 and 402 in such a way that the times of the timers 102 and 402 coincide with the time of the timer 12 of the Master 10.

(9) The Master 10 causes the encapsulators 150 and 450 of the M_SerDeses 100 and 400 to encapsulate the time control commands for time-synchronizing the timer 12 of the Master 10 and the timers 202 and 502 of the S_SerDeses 200 and 500, in the protocol X format.

(10) The encapsulated time control commands of the protocol X format are transmitted to the S_SerDeses 200 and 500.

(11) The time control commands are restored by deencapsulation at the deencapsulators 160 and 560 of the S_SerDeses 200 and 500 and are transmitted to the controllers 201 and 501 of the S_SerDeses 200 and 500.

(12) The controllers 201 and 501 set the timer 502 according to a reception command in such a way that the time of the timer 502 coincides with the time of the timer 12 of the Master 10.

In the manner described above, time synchronization can be achieved among the timers 12, 402, and 502. Accordingly, as a result of time synchronization achieved among the timers 12, 102, 202, 402, and 502, time synchronization in the entire system can be achieved, so that a start time of executing a command supplied from the Master 10 can be synchronized among multiple devices in the system.

### (Effects provided by present embodiment)

The M_SerDes 100 and the S_SerDes 200 according to the present embodiment are capable of sampling a GPIO signal supplied from the Master 10 or the Slave 20, by either full sampling or edge sampling, if needed. For example, in a case where a toggle rate of the GPIO signal is high, full sampling is selected, so that the GPIO signal can be prevented from being missed. In a case where the toggle rate of the GPIO signal is low, edge sampling is selected, so that only information regarding the start point of the GPIO signal and a logic change point of the GPIO signal can be acquired to achieve reduction in the amount of data and efficient data transmission.

The M_SerDes 100 according to the present embodiment performs GPIO communication with the Master 10, the S_SerDes 200 performs GPIO communication with the Slave 20, and serial signal transmission can be performed between the M_SerDes 100 and the S_SerDes 200 by a predetermined communication protocol X. The predetermined communication protocol X is a half-duplex communication TDD method, for example, and GPIO communication is performed by a full-duplex communication method. Therefore, the M_SerDes 100 and the S_SerDes 200 can perform high-speed serial communication by converting a full-duplex communication signal into a half-duplex communication packet.

Further, the M_SerDes 100 is capable of, prior to start of communication with the S_SerDes 200, generating a packet to be transmitted to the S_SerDes 100, on the basis of GPIO setting information transmitted from the Master 10 by a communication method that is different from GPIO communication. The GPIO setting information can easily be obtained at the S_SerDes 100 because the GPIO setting information can be contained in GPIO header information of a packet. Therefore, on the basis of GPIO setting information supplied from the Master 10, the S_SerDes 100 is capable of extracting a GPIO signal from a packet and converting a GPIO signal supplied from the Slave 20 into a packet.

### [Reference Signs List]

1: Communication system
6: Transmission path
10: Master
11: Controller
12: Timer
13: Input/output buffer
21: Controller
22: Timer
23: Input/output buffer
51: Enc core
52: Encoder
53: Sampler
61: DeEnc core
62: Decoder
63: Memory
64: Selector
100: M_SerDes
101: Controller
102: Timer
103: Input/output buffer
110: PHY
120: LINK
150: Encapsulator
160: Decapsulator
160: Deencapsulator
200: S_SerDes
201: Controller
202: Timer
203: Input/output buffer
204: Input/output buffer
210: PHY
220: LINK
250: Encapsulator
260: Deencapsulator
270: I2C controller
400: M_SerDes
401: Controller
402: Timer
450: Encapsulator
500: S_SerDes
501: Controller
502: Timer

## Claims

1. A communication device (100) comprising:
a controller (101) that determines a timestamp to be used as a start point and a unit period of the timestamp starting from the start point;
an encapsulator (150) that generates a first GPIO packet including all sampling data pieces obtained by sampling a GPIO signal supplied from a Master (10), by a fixed sampling period starting from the start point, in synchronization with the timestamp, or sampling data pieces obtained by performing sampling at a sampling interval corresponding to a timing of a logic change of the GPIO signal and information regarding sampling positions;
a LINK (120) that generates an Up link packet including the first GPIO packet; and
a PHY (110) that transmits, to a communication counter device, a transmission signal including the Up link packet and conforming to a predetermined communication protocol,
wherein the controller (101) receives, from the Master (10), GPIO setting information that includes a sampling period, a timestamp, and sampling mode information by which either a first mode or a second mode is designated,
in the first mode, the encapsulator (150) generates the first GPIO packet that includes all sampling data pieces obtained by sampling a first GPIO signal received from the Master (10), by the sampling period starting from the start point, and,
in the second mode, in a case where a value of the sampling data piece sampled at a first sampling timing is not equal to a value of the sampling data piece sampled at a second sampling timing which is later by the sampling period than the first sampling timing, the encapsulator (150) generates the first GPIO packet that includes the sampling data piece sampled at the second sampling timing and first time information indicating the second sampling timing.

2. The communication device (100) according to claim 1, further comprising:
a deencapsulator (160) that reproduces a second GPIO signal and transmits the second GPIO signal to the Master (10), wherein
the PHY (110) receives, from the communication counter device, a transmission signal conforming to the predetermined communication protocol,
the LINK (120) separates a second GPIO packet from the transmission signal,
the deencapsulator (160) reproduces the second GPIO signal on a basis of the sampling mode information, the start point, the sampling period, and the second GPIO packet,
in the first mode, one or more sampling data pieces are included in the second GPIO packet, and the deencapsulator (160) reproduces the second GPIO signal by allocating the sampling data pieces included in the second GPIO packet to respective sampling data pieces sampled each time the sampling period elapses from the start point, and,
in the second mode, one or more sampling data pieces are included in the second GPIO packet in association with second time information indicating corresponding sampling timings, and the deencapsulator (160) reproduces the second GPIO signal by repeating a process of allocating the sampling data piece corresponding to the second time information at the sampling timing indicated by the second time information and then allocating the same sampling data piece during the sampling period until the next sampling timing indicated by the second time information included in the second GPIO packet.

3. The communication device (100) according to claim 2, comprising:
a second timer (102) that outputs time information synchronized with a first timer (12) included in the Master (10), wherein
the deencapsulator (160) includes a memory (63) that stores the second GPIO signal,
the second GPIO packet includes timestamp information regarding an output timing of the second GPIO signal, and,
in a case where the timestamp information is set to a first value, the deencapsulator (160) transmits the second GPIO signal to the Master (10) without storing the second GPIO signal into the memory (63), and in a case where the timestamp information is set to a second value, the deencapsulator (160) stores the second GPIO signal into the memory (63), and reads out the second GPIO signal from the memory (63) and transmits the second GPIO signal to the Master (10) when the second timer (102) time information matches time information inserted succeedingly to the timestamp information in the second GPIO packet.

4. The communication device (100) according to any one of claims 1 to 3, wherein,
prior to start of GPIO communication with the Master (10), the controller (101) controls the encapsulator (150) to generate the packet, on a basis of the GPIO setting information transmitted from the Master (10) by a communication method that is different from GPIO communication.

5. The communication device (100) according to claim 4, wherein
the GPIO setting information includes at least one of information regarding a sampling frequency of the GPIO signal, GPIO pin setting information, GPIO configuration information, or information regarding a data length of the sampled data piece.

6. The communication device (100) according to claim 5, wherein
the encapsulator (150) generates the first GPIO packet that includes header information in which at least one of the sampling mode information, the sampling frequency information, the GPIO pin setting information, GPIO configuration information, or the data length information is included.

7. The communication device (100) according to claim 6, wherein
the GPIO configuration information includes the number of pins to perform GPIO communication, the GPIO pin setting information, and a time slot to store GPIO communication information.

8. The communication device (100) according to claim 6 or 7, wherein
the encapsulator (150) generates at least one of the first GPIO packet that does not include the sampled data piece but includes the header information, the first GPIO packet that includes the header information and the sampled data piece, or the first GPIO packet that does not include the header information but includes the sampled data piece, wherein
the encapsulator (150) adds at least one of timestamp information or error detection information to the first GPIO packet.

9. A communication device (200) comprising:
a PHY (210) that receives, from a communication counter device, a transmission signal conforming to a predetermined communication protocol;
a LINK (220) that separates a first GPIO packet including a time control command from the transmission signal;
a controller (201) that determines a start point on a basis of the time control command; and
a deencapsulator (260) that determines whether sampling mode information included in header information in the first GPIO packet is set to a first mode indicating inclusion of all sampling data pieces obtained by sampling a GPIO signal transmitted from a Master (10), by a fixed sampling period, or a second mode indicating inclusion of sampling data pieces obtained by sampling the GPIO signal at a sampling interval corresponding to a timing of a logic change of the GPIO signal and information regarding sampling positions, and converts the first GPIO packet into a first GPIO signal and transmits the first GPIO signal to a Slave (20).

10. The communication device (200) according to claim 9, wherein,
in the first mode, one or more sampling data pieces are included in the first GPIO packet, and the deencapsulator (260) reproduces the first GPIO signal by allocating the sampling data pieces included in the first GPIO packet to respective sampling data pieces sampled each time the sampling period elapses from the start point, and,
in the second mode, one or more sampling data pieces are included in the first GPIO packet in association with first time information indicating corresponding sampling timings, and the deencapsulator (260) reproduces the first GPIO signal by repeating a process of allocating the sampling data piece corresponding to the first time information at a sampling timing indicated by the first time information and then allocating the same sampling data piece during the sampling period until the next sampling timing indicated by the first time information included in the first GPIO packet.

11. The communication device (200) according to claim 9 or 10, comprising:
a second timer (202) that outputs time information synchronized with a first timer (12) included in the Master (10), wherein
the deencapsulator (260) includes a memory (63) that stores the first GPIO signal,
the first GPIO packet includes timestamp information regarding an output timing of the first GPIO signal, and,
in a case where the timestamp information is set to a first value, the deencapsulator (260) transmits the first GPIO signal to the Slave (20) without storing the first GPIO signal into the memory (63), and in a case where the timestamp information is set to a second value, the deencapsulator (260) stores the first GPIO signal into the memory (63), and reads out the first GPIO signal from the memory and transmits the first GPIO signal to the Slave (20) when the second timer (202) time information matches time information inserted succeedingly to the timestamp information in the first GPIO packet.

12. The communication device (200) according to any one of claims 9 to 11, comprising:
an encapsulator (250) that generates a second GPIO packet including a sampling data piece obtained by, starting from a start point, sampling a second GPIO signal supplied from the Slave (20), by a fixed sampling period or at a sampling interval corresponding to a timing of a logic change of the GPIO signal and information regarding a sampling position, wherein,
in the first mode, the encapsulator (250) generates the second GPIO packet that includes all sampling data pieces obtained by sampling the second GPIO signal received from the Slave (20), by the sampling period starting from the start point, and,
in the second mode, in a case where a value of the sampling data piece sampled at a first sampling timing is not equal to a value of the sampling data piece sampled at a second sampling timing which is later by the sampling period than the first sampling timing, the encapsulator (250) generates the second GPIO packet that includes the sampling data piece sampled at the second sampling timing and time information indicating the second sampling timing.

13. A communication system (1) comprising:
a Master SerDes (100) and a Slave SerDes (200) between which serial communication is performed by a predetermined communication protocol;
the Master SerDes (100) including
a first controller (101) that determines a timestamp to be used as a start point and a unit period of the timestamp starting from the start point,
a first encapsulator (150) that generates a first GPIO packet including all sampling data pieces obtained by sampling a GPIO signal supplied from a Master (10), by a fixed sampling period starting from the start point, in synchronization with the timestamp, or sampling data pieces obtained by performing sampling at a sampling interval corresponding to a timing of a logic change of the GPIO signal and information regarding sampling positions,
a first LINK (120) that generates an Up link packet including the first GPIO packet, and
a first PHY (110) that transmits, to a communication counter device, a transmission signal including the Up link packet and conforming to a predetermined communication protocol;
the Slave SerDes (200) including
a second PHY (210) that receives, from a communication counter device, a transmission signal conforming to the predetermined communication protocol,
a second LINK (220) that separates a second GPIO packet including a time control command from the transmission signal,
a second controller (201) that determines a start point on a basis of the time control command, and
a first deencapsulator (260) that determines whether sampling mode information included in header information in the second GPIO packet is set to a first mode indicating inclusion of all sampling data pieces obtained by sampling a second GPIO signal transmitted from the Master, by a fixed sampling period, or a second mode indicating inclusion of sampling data pieces obtained by sampling the second GPIO signal at a sampling interval corresponding to a timing of a logic change of the GPIO signal and information regarding sampling positions, and converts the second GPIO packet into the second GPIO signal and transmits the second GPIO signal to a Slave (20).

14. A communication method for performing serial communication between a Master SerDes (100) and a Slave SerDes (200) by a predetermined communication protocol, wherein
the Master SerDes (100)
determines a timestamp to be used as a start point and a unit period of the timestamp starting from the start point,
generates a first GPIO packet including all sampling data pieces obtained by sampling a GPIO signal supplied from a Master (10), by a fixed sampling period starting from the start point, in synchronization with the timestamp, or sampling data pieces obtained by performing sampling at a sampling interval corresponding to a timing of a logic change of the GPIO signal and information regarding sampling positions,
generates an Up link packet including the first GPIO packet, and
transmits a transmission signal including the Up link packet and conforming to a predetermined communication protocol to the Slave SerDes (200), and
the Slave SerDes (200)
receives a transmission signal conforming to the predetermined communication protocol from a communication counter device,
separates a second GPIO packet including a time control command from the transmission signal,
determines a start point on a basis of the time control command, and
determines whether sampling mode information included in header information in the second GPIO packet is set to a first mode indicating inclusion of all sampling data pieces obtained by sampling a second GPIO signal supplied from the Master (10), by a fixed sampling period, or a second mode indicating inclusion of sampling data pieces obtained by sampling the second GPIO signal at a sampling interval corresponding to a timing of a logic change of the GPIO signal and information regarding sampling positions, and converts the second GPIO packet into the second GPIO signal and transmits the second GPIO signal to a Slave (20).

## Patentansprüche

1. Kommunikationsvorrichtung (100), die umfasst:
eine Steuereinheit (101), die einen Zeitstempel, der als Startpunkt verwendet werden soll, und eine Einheitsperiode des Zeitstempels ab dem Startpunkt ermittelt;
einen Verkapseler (150), der ein erstes GPIO-Paket erzeugt, das alle Abtastdatenteile, die durch Abtasten eines aus einem Master (10) zugeführten GPIO-Signals mit einer festen Abtastperiode ab dem Startpunkt in Synchronisation mit dem Zeitstempel erhalten wurden, oder Abtastdatenteile, die durch Durchführen einer Abtastung mit einem Abtastintervall erhalten wurden, das einem Zeitpunkt einer Logikänderung des GPIO-Signals entspricht, und Informationen bezüglich Abtastpositionen einschließt;
eine LINK (120), die ein Uplink-Paket einschließlich des ersten GPIO-Pakets erzeugt; und
eine PHY (110), die ein Übertragungssignal an eine Kommunikationszählervorrichtung überträgt, das das Uplink-Paket einschließt und einem vorgegebenen Kommunikationsprotokoll entspricht,
wobei die Steuereinheit (101) von dem Master (10) GPIO-Einstellungsinformationen empfängt, die eine Abtastperiode, einen Zeitstempel und Abtastmodusinformationen einschließen, mit denen entweder ein erster Modus oder ein zweiter Modus bezeichnet ist,
wobei der Verkapseler (150) im ersten Modus das erste GPIO-Paket erzeugt, das alle Abtastdatenteile einschließt, die durch Abtasten eines vom Master (10) empfangenen ersten GPIO-Signals mit der ab dem Startpunkt startenden Abtastperiode erhalten wurden, und
der Verkapseler (150) im zweiten Modus in einem Fall, in dem ein Wert des zu einem ersten Abtastzeitpunkt abgetasteten Abtastdatenteils nicht gleich einem Wert des Abtastdatenteils ist, das zu einem zweiten Abtastzeitpunkt abgetastet wurde, der um die Abtastperiode später als der erste Abtastzeitpunkt liegt, das erste GPIO-Paket erzeugt, das das zu dem zweiten Abtastzeitpunkt abgetastete Abtastdatenteil und erste Zeitinformationen einschließt, die den zweiten Abtastzeitpunkt angeben.

2. Kommunikationsvorrichtung (100) nach Anspruch 1, die ferner umfasst:
einen Entkapseler (160), der ein zweites GPIO-Signal reproduziert und das zweite GPIO-Signal an den Master (10) überträgt, wobei
die PHY (110) von der Kommunikationszählervorrichtung ein Übertragungssignal empfängt, das dem vorgegebenen Kommunikationsprotokoll entspricht,
die LINK (120) ein zweites GPIO-Paket von dem Übertragungssignal trennt,
der Entkapseler (160) das zweite GPIO-Signal auf einer Basis der Abtastmodusinformationen, des Startpunkts, der Abtastperiode und des zweiten GPIO-Pakets reproduziert,
in dem ersten Modus ein oder mehrere Abtastdatenteile in dem zweiten GPIO-Paket eingeschlossen werden und der Entkapseler (160) das zweite GPIO-Signal reproduziert, indem er die in dem zweiten GPIO-Paket eingeschlossenen Abtastdatenteile den jeweiligen Abtastdatenteilen zuordnet, die jedes Mal abgetastet werden, wenn die Abtastperiode ab dem Startpunkt abläuft, und
in dem zweiten Modus ein oder mehrere Abtastdatenteile in dem zweiten GPIO-Paket zusammen mit zweiten Zeitinformationen eingeschlossen werden, die entsprechende Abtastzeitpunkte angeben, und der Entkapseler (160) das zweite GPIO-Signal reproduziert, indem er einen Prozess des Zuordnens des Abtastdatenteils, das den zweiten Zeitinformationen entspricht, zu dem durch die zweiten Zeitinformationen angegebenen Abtastzeitpunkt wiederholt und dann dasselbe Abtastdatenteil während der Abtastperiode bis zum nächsten durch die in dem zweiten GPIO-Paket eingeschlossenen zweiten Zeitinformationen angegebenen Abtastzeitpunkt zuordnet.

3. Kommunikationsvorrichtung (100) nach Anspruch 2, die umfasst:
einen zweiten Zeitgeber (102), der Zeitinformationen ausgibt, die mit einem ersten Zeitgeber (12) in dem Master (10) synchronisiert sind, wobei
der Entkapseler (160) einen Speicher (63) einschließt, der das zweite GPIO-Signal speichert,
das zweite GPIO-Paket Zeitstempelinformationen bezüglich eines Ausgabezeitpunkts des zweiten GPIO-Signals einschließt und
der Entkapseler (160) in einem Fall, in dem die Zeitstempelinformationen auf einen ersten Wert festgelegt sind, der Entkapseler (160) das zweite GPIO-Signal an den Master (10) überträgt, ohne das zweite GPIO in dem Speicher (63) zu speichern, und in einem Fall, in dem die Zeitstempelinformationen auf einen zweiten Wert festgelegt sind, das zweite GPIO-Signal in dem Speicher (63) speichert und das zweite GPIO-Signal aus dem Speicher (63) liest und das zweite GPIO-Signal an den Master (10) überträgt, wenn Zeitinformationen des zweiten Zeitgebers (102) mit Zeitinformationen übereinstimmen, die nachfolgend in die Zeitstempelinformationen in dem zweiten GPIO-Paket eingefügt wurden.

4. Kommunikationsvorrichtung (100) nach einem der Ansprüche 1 bis 3, wobei
die Steuereinheit (101) vor Beginn von GPIO-Kommunikation mit dem Master (10) den Verkapseler (150) steuert, um das Paket auf einer Basis der GPIO-Einstellungsinformationen zu erzeugen, die aus dem Master (10) durch ein Kommunikationsverfahren übertragen wurden, das sich von GPIO-Kommunikation unterscheidet.

5. Kommunikationsvorrichtung (100) nach Anspruch 4, wobei
die GPIO-Einstellungsinformationen mindestens eines einschließen aus Informationen bezüglich einer Abtastfrequenz des GPIO-Signals, GPIO-Pin-Einstellungsinformationen, GPIO-Konfigurationsinformationen oder Informationen bezüglich einer Datenlänge des abgetasteten Datenteils.

6. Kommunikationsvorrichtung (100) nach Anspruch 5, wobei
der Verkapseler (150) das erste GPIO-Paket erzeugt, das Header-Informationen einschließt, in denen mindestens eines aus den Abtastmodusinformationen, den Abtastfrequenzinformationen, den GPIO-Pin-Einstellungsinformationen, den GPIO-Konfigurationsinformationen oder den Datenlängeninformationen eingeschlossen ist.

7. Kommunikationsvorrichtung (100) nach Anspruch 6, wobei
die GPIO-Konfigurationsinformationen die Anzahl von Pins zum Durchführen der GPIO-Kommunikation, die GPIO-Pin-Einstellungsinformationen und ein Zeitfenster zum Speichern von GPIO-Kommunikationsinformationen einschließen.

8. Kommunikationsvorrichtung (100) nach Anspruch 6 oder 7, wobei
der Verkapseler (150) mindestens eines von dem ersten GPIO-Paket, das das abgetastete Datenteil nicht einschließt, aber die Header-Informationen einschließt; dem ersten GPIO-Paket, das die Header-Informationen und das abgetastete Datenteil einschließt; oder dem ersten GPIO-Paket erzeugt, das die Header-Informationen nicht einschließt, aber das abgetastete Datenteil einschließt, wobei
der Verkapseler (150) dem ersten GPIO-Paket mindestens eines von Zeitstempelinformationen oder Fehlererkennungsinformationen hinzufügt.

9. Kommunikationsvorrichtung (200), die umfasst:
eine PHY (210), die von einer Kommunikationszählervorrichtung ein Übertragungssignal empfängt, das einem vorgegebenen Kommunikationsprotokoll entspricht;
eine LINK (220), die ein erstes GPIO-Paket, das einen Zeitsteuerungsbefehl einschließt, von dem Übertragungssignal trennt;
eine Steuereinheit (201), die auf einer Basis des Zeitsteuerungsbefehls einen Startpunkt ermittelt; und
einen Entkapseler (260), der ermittelt, ob Abtastmodusinformationen, die in Header-Informationen in dem ersten GPIO-Paket eingeschlossen sind, auf einen ersten Modus, der eine Einbeziehung aller Abtastdatenteile angibt, die durch Abtasten eines aus einem Master (10) übertragenen GPIO-Signals mit einer festen Abtastperiode erhalten wurden, oder auf einen zweiten Modus festgelegt sind, der eine Einbeziehung von Abtastdatenteilen angibt, die durch Abtasten des GPIO-Signals in einem Abtastintervall erhalten wurden, das einem Zeitpunkt einer Logikänderung des GPIO-Signals und Informationen bezüglich Abtastpositionen entspricht, und das erste GPIO-Paket in ein erstes GPIO-Signal umwandelt und das erste GPIO-Signal an einen Slave (20) überträgt.

10. Kommunikationsvorrichtung (200) nach Anspruch 9, wobei,
in dem ersten Modus, ein oder mehrere Abtastdatenteile in dem ersten GPIO-Paket eingeschlossen werden und der Entkapseler (260) das erste GPIO-Signal reproduziert, indem er die in dem ersten GPIO-Paket eingeschlossenen Abtastdatenteile den jeweiligen Abtastdatenteilen zuordnet, die jedes Mal abgetastet werden, wenn die Abtastperiode ab dem Startpunkt abläuft, und
in dem zweiten Modus, ein oder mehrere Abtastdatenteile in dem ersten GPIO-Paket zusammen mit ersten Zeitinformationen eingeschlossen werden, die entsprechende Abtastzeitpunkte angeben, und der Entkapseler (260) das erste GPIO-Signal reproduziert, indem er einen Prozess des Zuordnens des Abtastdatenteils, das den ersten Zeitinformationen entspricht, zu einem durch die ersten Zeitinformationen angegebenen Abtastzeitpunkt wiederholt und dann dasselbe Abtastdatenteil während der Abtastperiode bis zum nächsten durch die im ersten GPIO-Paket eingeschlossenen ersten Zeitinformationen angegebenen Abtastzeitpunkt zuordnet.

11. Kommunikationsvorrichtung (200) nach Anspruch 9 oder 10, die umfasst:
einen zweiten Zeitgeber (202), der Zeitinformationen ausgibt, die mit einem ersten Zeitgeber (12), der in dem Master (10) eingeschlossen ist, synchronisiert sind, wobei
der Entkapseler (260) einen Speicher (63) einschließt, der das erste GPIO-Signal speichert,
das erste GPIO-Paket Zeitstempelinformationen bezüglich eines Ausgabezeitpunkts des ersten GPIO-Signals einschließt und
der Entkapseler (260) in einem Fall, in dem die Zeitstempelinformationen auf einen ersten Wert festgelegt sind, das erste GPIO-Signal an den Slave (20) überträgt, ohne das erste GPIO-Signal im Speicher (63) zu speichern, und der Entkapseler (260) in einem Fall, in dem die Zeitstempelinformationen auf einen zweiten Wert festgelegt sind, das erste GPIO-Signal in dem Speicher (63) speichert und das erste GPIO-Signal aus dem Speicher liest und das erste GPIO-Signal an den Slave (20) überträgt, wenn Zeitinformationen des zweiten Zeitgebers (202) mit Zeitinformationen übereinstimmen, die nachfolgend in die Zeitstempelinformationen in dem ersten GPIO-Paket eingefügt wurden.

12. Kommunikationsvorrichtung (200) nach einem der Ansprüche 9 bis 11, die umfasst:
einen Verkapseler (250), der ein zweites GPIO-Paket erzeugt, das ein Abtastdatenteil einschließt, das durch Abtasten eines zweiten GPIO-Signals ab einem Startpunkt erhalten wird, das aus dem Slave (20) mit einer festen Abtastperiode oder in einem Abtastintervall zugeführt wird, das einem Zeitpunkt einer Logikänderung des GPIO-Signals und Informationen bezüglich einer Abtastposition entspricht, wobei
der Verkapseler (250) im ersten Modus das zweite GPIO-Paket erzeugt, das alle Abtastdatenteile einschließt, die durch Abtasten des vom Slave (20) empfangenen zweiten GPIO-Signals mit der ab dem Startpunkt startenden Abtastperiode erhalten wurden, und
der Verkapseler (250) im zweiten Modus in einem Fall, in dem ein Wert des zu einem ersten Abtastzeitpunkt abgetasteten Abtastdatenteils nicht gleich einem Wert des Abtastdatenteils ist, das zu einem zweiten Abtastzeitpunkt abgetastet wurde, der um die Abtastperiode später als der erste Abtastzeitpunkt liegt, das zweite GPIO-Paket erzeugt, das das zu dem zweiten Abtastzeitpunkt abgetastete Abtastdatenteil und Zeitinformationen einschließt, die den zweiten Abtastzeitpunkt angeben.

13. Kommunikationssystem (1), das umfasst:
einen Master-SerDes (100) und einen Slave-SerDes (200), zwischen denen serielle Kommunikation über ein vorgegebenes Kommunikationsprotokoll durchgeführt wird;
wobei der Master-SerDes (100) einschließt
eine erste Steuereinheit (101), die einen Zeitstempel, der als Startpunkt verwendet werden soll, und eine Einheitsperiode des Zeitstempels ab dem Startpunkt ermittelt,
einen ersten Verkapseler (150), der ein erstes GPIO-Paket erzeugt, das alle Abtastdatenteile, die durch Abtasten eines aus einem Master (10) zugeführten GPIO-Signals mit einer festen Abtastperiode ab dem Startpunkt in Synchronisation mit dem Zeitstempel erhalten wurden, oder Abtastdatenteile, die durch Durchführen einer Abtastung mit einem Abtastintervall erhalten wurden, das einem Zeitpunkt einer Logikänderung des GPIO-Signals entspricht, und Informationen bezüglich Abtastpositionen einschließt,
eine erste LINK (120), die ein Uplink-Paket einschließlich des ersten GPIO-Pakets erzeugt, und
eine erste PHY (110), die ein Übertragungssignal zu einer Kommunikationszählervorrichtung überträgt, das das Uplink-Paket einschließt und einem vorgegebenen Kommunikationsprotokoll entspricht;
wobei der Slave-SerDes (200) einschließt
eine zweite PHY (210), die von einer Kommunikationszählervorrichtung ein Übertragungssignal empfängt, das einem vorgegebenen Kommunikationsprotokoll entspricht,
eine zweite LINK (220), die ein zweites GPIO-Paket, das einen Zeitsteuerungsbefehl einschließt, von dem Übertragungssignal trennt,
eine zweite Steuereinheit (201), die auf einer Basis des Zeitsteuerungsbefehls einen Startpunkt ermittelt, und
einen ersten Entkapseler (260), der ermittelt, ob Abtastmodusinformationen, die in Header-Informationen in dem zweiten GPIO-Paket eingeschlossen sind, auf einen ersten Modus, der eine Einbeziehung aller Abtastdatenteile angibt, die durch Abtasten eines aus dem Master übertragenen zweiten GPIO-Signals mit einer festen Abtastperiode erhalten wurden, oder auf einen zweiten Modus festgelegt sind, der eine Einbeziehung von Abtastdatenteilen angibt, die durch Abtasten des zweiten GPIO-Signals in einem Abtastintervall erhalten wurden, das einem Zeitpunkt einer Logikänderung des GPIO-Signals und Informationen bezüglich Abtastpositionen entspricht, und das zweite GPIO-Paket in das zweiten GPIO-Signal umwandelt und das zweite GPIO-Signal an einen Slave (20) überträgt.

14. Kommunikationsverfahren zum Durchführen serieller Kommunikation zwischen einem Master-SerDes (100) und einem Slave-SerDes (200) durch ein vorgegebenes Kommunikationsprotokoll, wobei
der Master-SerDes (100)
einen als Startpunkt zu verwendenden Zeitstempel und eine Einheitsperiode des Zeitstempels ermittelt, die ab dem Startpunkt startet,
ein erstes GPIO-Paket erzeugt, das alle Abtastdatenteile, die durch Abtasten eines aus einem Master (10) zugeführten GPIO-Signals mit einer festen Abtastperiode ab dem Startpunkt in Synchronisation mit dem Zeitstempel erhalten wurden, oder Abtastdatenteile, die durch Durchführen einer Abtastung mit einem Abtastintervall erhalten wurden, das einem Zeitpunkt einer Logikänderung des GPIO-Signals entspricht, und Informationen bezüglich Abtastpositionen einschließt,
ein Uplink-Paket einschließlich des ersten GPIO-Pakets erzeugt und
ein Übertragungssignal, das das Uplink-Paket einschließt und einem vorgegebenen Kommunikationsprotokoll entspricht, an den Slave-SerDes (200) überträgt, und
der Slave-SerDes (200)
ein Übertragungssignal, das dem vorgegebenen Kommunikationsprotokoll entspricht, von einer Kommunikationszählervorrichtung empfängt,
ein zweites GPIO-Paket, das einen Zeitsteuerungsbefehl einschließt, von dem Übertragungssignal trennt,
einen Startpunkt auf einer Basis des Zeitsteuerungsbefehls ermittelt und
ermittelt, ob Abtastmodusinformationen, die in Header-Informationen in dem zweiten GPIO-Paket eingeschlossen sind, auf einen ersten Modus, der eine Einbeziehung aller Abtastdatenteile angibt, die durch Abtasten eines aus dem Master (10) zugeführten zweiten GPIO-Signals mit einer festen Abtastperiode erhalten wurden, oder auf einen zweiten Modus festgelegt sind, der eine Einbeziehung von Abtastdatenteilen angibt, die durch Abtasten des zweiten GPIO-Signals in einem Abtastintervall erhalten wurden, das einem Zeitpunkt einer Logikänderung des GPIO-Signals und Informationen bezüglich Abtastpositionen entspricht, und das zweite GPIO-Paket in das zweiten GPIO-Signal umwandelt und das zweite GPIO-Signal an einen Slave (20) überträgt.

## Revendications

1. Dispositif de communication (100) comprenant :
un dispositif de commande (101) qui détermine une estampille temporelle à utiliser comme point de départ et une période unitaire de l'estampille temporelle à partir du point de départ ;
un encapsulateur (150) qui génère un premier paquet GPIO comportant tous les éléments de données d'échantillonnage obtenus en échantillonnant un signal GPIO fourni à partir d'un Maître (10), selon une période d'échantillonnage fixe à partir du point de départ, en synchronisation avec l'estampille temporelle, ou des éléments de données d'échantillonnage obtenus en effectuant un échantillonnage à un intervalle d'échantillonnage correspondant à un moment d'un changement logique du signal GPIO et des informations concernant des positions d'échantillonnage ;
une LIAISON (120) qui génère un paquet de liaison montante comportant le premier paquet GPIO ; et
un PHY (110) qui transmet, à un dispositif de comptage de communication, un signal de transmission comportant le paquet de liaison ascendante et conforme à un protocole de communication prédéterminé,
dans lequel le dispositif de commande (101) reçoit, à partir du Maître (10), des informations de réglage GPIO qui comportent une période d'échantillonnage, une estampille temporelle, et des informations de mode d'échantillonnage par lesquelles soit un premier mode, soit un second mode est désigné,
dans le premier mode, l'encapsulateur (150) génère le premier paquet GPIO qui comporte tous les éléments de données d'échantillonnage obtenus par échantillonnage d'un premier signal GPIO reçu du Maître (10), selon la période d'échantillonnage à partir du point de départ, et,
dans le second mode, dans le cas où une valeur de l'élément de données d'échantillonnage échantillonné à un premier moment d'échantillonnage n'est pas égale à une valeur de l'élément de données d'échantillonnage échantillonné à un second moment d'échantillonnage qui est postérieur au premier moment d'échantillonnage de la période d'échantillonnage, l'encapsulateur (150) génère le premier paquet GPIO qui comporte l'élément de données d'échantillonnage échantillonné au second moment d'échantillonnage et des premières informations temporelles indiquant le second moment d'échantillonnage.

2. Dispositif de communication (100) selon la revendication 1, comprenant en outre :
un désencapsulateur (160) qui reproduit un second signal GPIO et transmet le second signal GPIO au Maître (10), dans lequel
le PHY (110) reçoit, du dispositif de comptage de communication, un signal de transmission conforme au protocole de communication prédéterminé,
la LIAISON (120) sépare un second paquet GPIO du signal de transmission,
le désencapsulateur (160) reproduit le second signal GPIO sur la base des informations de mode d'échantillonnage, du point de départ, de la période d'échantillonnage et du second paquet GPIO,
dans le premier mode, un ou plusieurs éléments de données d'échantillonnage sont inclus dans le second paquet GPIO, et le désencapsulateur (160) reproduit le second signal GPIO en attribuant les éléments de données d'échantillonnage inclus dans le second paquet GPIO à des éléments de données d'échantillonnage respectifs échantillonnés chaque fois que la période d'échantillonnage s'écoule à partir du point de départ, et,
dans le second mode, un ou plusieurs éléments de données d'échantillonnage sont inclus dans le second paquet GPIO en association avec des secondes informations temporelles indiquant des moments d'échantillonnage correspondants, et le désencapsulateur (160) reproduit le second signal GPIO en répétant un processus consistant à attribuer l'élément de données d'échantillonnage correspondant aux secondes informations temporelles au moment d'échantillonnage indiqué par les secondes informations temporelles, puis, à attribuer le même élément de données d'échantillonnage pendant la période d'échantillonnage jusqu'au prochain moment d'échantillonnage indiqué par les secondes informations temporelles incluses dans le second paquet GPIO.

3. Dispositif de communication (100) selon la revendication 2, comprenant :
une seconde minuterie (102) qui fournit des informations temporelles synchronisées avec une première minuterie (12) incluse dans le Maître (10), dans laquelle
le désencapsulateur (160) comporte une mémoire (63) qui stocke le second signal GPIO,
le second paquet GPIO comporte des informations d'estampille temporelle concernant un timing de sortie du second signal GPIO, et,
dans le cas où l'information d'estampille temporelle est réglée sur une première valeur, le désencapsulateur (160) transmet le second signal GPIO au Maître (10) sans stocker le second signal GPIO dans la mémoire (63), et dans le cas où l'information d'estampille temporelle est réglée sur une seconde valeur, le désencapsulateur (160) stocke le second signal GPIO dans la mémoire (63), lit le second signal GPIO dans la mémoire (63) et transmet le second signal GPIO au Maître (10) lorsque les informations temporelles de la seconde minuterie (102) correspondent aux informations temporelles insérées à la suite des informations d'estampille temporelle dans le second paquet GPIO.

4. Dispositif de communication (100) selon l'une quelconque des revendications 1 à 3, dans lequel,
avant le début de la communication GPIO avec le Maître (10), le dispositif de commande (101) commande l'encapsulateur (150) pour générer le paquet, sur la base des informations de réglage GPIO transmises par le Maître (10) par une méthode de communication différente de la communication GPIO.

5. Dispositif de communication (100) selon la revendication 4, dans lequel
les informations de réglage GPIO comprennent au moins l'une des informations suivantes : fréquence d'échantillonnage du signal GPIO, informations de réglage des broches GPIO, informations de configuration GPIO ou informations relatives à la longueur des données échantillonnées.

6. Dispositif de communication (100) selon la revendication 5, dans lequel
l'encapsulateur (150) génère le premier paquet GPIO qui comporte des informations d'en-tête dans lesquelles figure au moins l'une des informations suivantes : informations sur le mode d'échantillonnage, informations sur la fréquence d'échantillonnage, informations sur le réglage des broches GPIO, informations sur la configuration GPIO ou informations sur la longueur des données.

7. Dispositif de communication (100) selon la revendication 6, dans lequel
les informations de configuration GPIO comprennent le nombre de broches pour effectuer la communication GPIO, les informations de réglage des broches GPIO et un intervalle de temps pour stocker les informations de communication GPIO.

8. Dispositif de communication (100) selon la revendication 6 ou 7, dans lequel
l'encapsulateur (150) génère au moins l'un des paquets GPIO suivants : le premier paquet GPIO qui ne comporte pas l'élément de données échantillonné mais inclut les informations d'en-tête, le premier paquet GPIO qui inclut les informations d'en-tête et l'élément de données échantillonné, ou le premier paquet GPIO qui n'inclut pas les informations d'en-tête mais inclut l'élément de données échantillonné, dans lequel
l'encapsulateur (150) ajoute au moins l'une des informations d'estampille temporelle ou de détection d'erreur au premier paquet GPIO.

9. Dispositif de communication (200) comprenant :
un PHY (210) qui reçoit, d'un compteur de communication, un signal de transmission conforme à un protocole de communication prédéterminé ;
un LIAISON (220) qui sépare du signal de transmission un premier paquet GPIO comportant une commande de commande du temps ;
un dispositif de commande (201) qui détermine un point de départ sur la base de la commande de commande du temps ; et
un désencapsulateur (260) qui détermine si les informations relatives au mode d'échantillonnage incluses dans les informations d'en-tête du premier paquet GPIO sont réglées sur un premier mode indiquant l'inclusion de tous les éléments de données d'échantillonnage obtenues par échantillonnage d'un signal GPIO transmis par un Maître (10), selon une période d'échantillonnage fixe, ou un second mode indiquant l'inclusion de données d'échantillonnage obtenues par échantillonnage du signal GPIO à un intervalle d'échantillonnage correspondant à un moment de changement logique du signal GPIO et à des informations concernant les positions d'échantillonnage, et convertit le premier paquet GPIO en un premier signal GPIO et transmet le premier signal GPIO à un Esclave (20).

10. Dispositif de communication (200) selon la revendication 9, dans lequel,
dans le premier mode, un ou plusieurs éléments de données d'échantillonnage sont inclus dans le premier paquet GPIO, et le désencapsulateur (260) reproduit le premier signal GPIO en attribuant les éléments de données d'échantillonnage inclus dans le premier paquet GPIO à des éléments de données d'échantillonnage respectifs échantillonnés chaque fois que la période d'échantillonnage s'écoule à partir du point de départ, et,
dans le premier mode, un ou plusieurs éléments de données d'échantillonnage sont inclus dans le premier paquet GPIO en association avec des premières informations temporelles indiquant des moments d'échantillonnage correspondants, et le désencapsulateur (260) reproduit le premier signal GPIO en répétant un processus consistant à attribuer l'élément de données d'échantillonnage correspondant aux premières informations temporelles au moment d'échantillonnage indiqué par les premières informations temporelles, puis, à attribuer le même élément de données d'échantillonnage pendant la période d'échantillonnage jusqu'au prochain moment d'échantillonnage indiqué par les premières informations temporelles incluses dans le premier paquet GPIO.

11. Dispositif de communication (200) selon la revendication 9 ou 10, comprenant :
une seconde minuterie (202) qui fournit des informations temporelles synchronisées avec une première minuterie (12) incluse dans le Maître (10), dans laquelle
le désencapsulateur (260) comporte une mémoire (63) qui stocke le premier signal GPIO,
le premier paquet GPIO comporte des informations d'estampille temporelle concernant la synchronisation de sortie du premier signal GPIO, et,
dans le cas où l'information d'estampille temporelle est réglée sur une première valeur, le désencapsulateur (260) transmet le premier signal GPIO à l'Esclave (20) sans stocker le premier signal GPIO dans la mémoire (63), et dans le cas où l'information d'estampille temporelle est réglée sur une seconde valeur, le désencapsulateur (260) stocke le premier signal GPIO dans la mémoire (63), et lit le premier signal GPIO dans la mémoire et transmet le premier signal GPIO à l'Esclave (20) lorsque les informations temporelles de la seconde minuterie (202) correspondent aux informations temporelles insérées à la suite des informations d'estampille temporelle dans le premier paquet GPIO.

12. Dispositif de communication (200) selon l'une quelconque des revendications 9 à 11, comprenant :
un encapsulateur (250) qui génère un second paquet GPIO comportant des données d'échantillonnage obtenues en échantillonnant, à partir d'un point de départ, un second signal GPIO fourni par l'Esclave (20), pendant une période d'échantillonnage fixe ou à un intervalle d'échantillonnage correspondant à un moment de changement logique du signal GPIO et des informations concernant une position d'échantillonnage, dans lequel,
dans le second mode, l'encapsulateur (250) génère le second paquet GPIO qui comporte tous les éléments de données d'échantillonnage obtenus par échantillonnage d'un premier signal GPIO reçu de l'Esclave (20), selon la période d'échantillonnage à partir du point de départ, et,
dans le second mode, dans le cas où une valeur de l'élément de données d'échantillonnage échantillonné à un premier moment d'échantillonnage n'est pas égale à une valeur de l'élément de données d'échantillonnage échantillonné à un second moment d'échantillonnage qui est postérieur au premier moment d'échantillonnage de la période d'échantillonnage, l'encapsulateur (250) génère le second paquet GPIO qui comporte l'élément de données d'échantillonnage échantillonné au second moment d'échantillonnage et des secondes informations temporelles indiquant le second moment d'échantillonnage.

13. Système de communication (1) comprenant :
un SerDes Maître (100) et un SerDes Esclave (200) entre lesquels s'effectue une communication en série selon un protocole de communication prédéterminé ;
le SerDes Maître (100), y compris
un premier dispositif de commande (101) qui détermine une estampille temporelle à utiliser comme point de départ et une période unitaire de l'estampille temporelle à partir du point de départ,
un premier encapsulateur (150) qui génère un premier paquet GPIO comportant tous les éléments de données d'échantillonnage obtenus en échantillonnant un signal GPIO fourni à partir d'un Maître (10), selon une période d'échantillonnage fixe à partir du point de départ, en synchronisation avec l'estampille temporelle, ou des éléments de données d'échantillonnage obtenus en effectuant un échantillonnage à un intervalle d'échantillonnage correspondant à un moment d'un changement logique du signal GPIO et des informations concernant des positions d'échantillonnage,
un premier LIAISON (120) qui génère un paquet de liaison montante comportant le premier paquet GPIO, et
un premier PHY (110) qui transmet, à un dispositif de comptage de communication, un signal de transmission comportant le paquet de liaison ascendante et conforme à un protocole de communication prédéterminé ;
les SerDes Esclaves (200), y compris
un seconde PHY (210) qui reçoit, d'un dispositif de comptage de communication, un signal de transmission conforme au protocole de communication prédéterminé,
un second LIAISON (220) qui sépare du signal de transmission un second paquet GPIO comportant une commande de commande du temps,
un second dispositif de commande (201) qui détermine un point de départ sur la base de la commande de commande du temps, et
un premier désencapsulateur (260) qui détermine si les informations relatives au mode d'échantillonnage incluses dans les informations d'en-tête du second paquet GPIO sont réglées sur un premier mode indiquant l'inclusion de tous les éléments de données d'échantillonnage obtenues par échantillonnage d'un second signal GPIO transmis par le Maître, selon une période d'échantillonnage fixe, ou à un second mode indiquant l'inclusion de données d'échantillonnage obtenues par échantillonnage du second signal GPIO à un intervalle d'échantillonnage correspondant à un moment de changement logique du signal GPIO et à des informations concernant les positions d'échantillonnage, et convertit le second paquet GPIO en second signal GPIO et transmet le second signal GPIO à un Esclave (20).

14. Procédé de communication permettant d'effectuer une communication en série entre un SerDes Maître (100) et un SerDes Esclave (200) au moyen d'un protocole de communication prédéterminé, dans laquelle
le Maître SerDes (100)
détermine une estampille temporelle à utiliser comme point de départ et une période d'unité de l'estampille temporelle à partir du point de départ,
génère un premier paquet GPIO comportant tous les éléments de données d'échantillonnage obtenus en échantillonnant un signal GPIO fourni à partir d'un Maître (10), selon une période d'échantillonnage fixe à partir du point de départ, en synchronisation avec l'estampille temporelle, ou des éléments de données d'échantillonnage obtenus en effectuant un échantillonnage à un intervalle d'échantillonnage correspondant à un moment d'un changement logique du signal GPIO et des informations concernant des positions d'échantillonnage,
génère un paquet de liaison montante comportant le premier paquet GPIO, et
transmet au SerDes Esclave (200) un signal de transmission comportant le paquet de liaison ascendante et conforme à un protocole de communication prédéterminé, et
le SerDes Esclave (200)
reçoit un signal de transmission conforme au protocole de communication prédéterminé de la part d'un dispositif de comptage de communication,
sépare du signal de transmission un second paquet GPIO comportant une commande de commande du temps,
détermine un point de départ sur la base de la commande de commande du temps, et
détermine si les informations relatives au mode d'échantillonnage incluses dans les informations d'en-tête du second paquet GPIO sont réglées sur un premier mode indiquant l'inclusion de tous les éléments de données d'échantillonnage obtenues par échantillonnage d'un second signal GPIO fourni par le Maître (10), selon une période d'échantillonnage fixe, ou sur un seconde mode indiquant l'inclusion des données d'échantillonnage obtenues par échantillonnage du second signal GPIO à un intervalle d'échantillonnage correspondant à un moment de changement logique du signal GPIO et aux informations relatives aux positions d'échantillonnage, et convertit le second paquet GPIO en second signal GPIO et transmet le second signal GPIO à un Esclave (20).
